# EUROPEAN PATENT SPECIFICATION

(11) **EP 4 155 180 B1**
(45) Date of publication and mention of the grant of the patent: **28.05.2025**
(21) Application number: 20961462.7
(22) Date of filing: 31.12.2020
(51) Int. Cl.: B62K 11/00, B62K 25/00, B62J 43/16, B62J 43/28, B60L 15/20

(54) **ELECTRIC MOTORCYCLE**
ELEKTRISCHES MOTORRAD
MOTOCYCLETTE ÉLECTRIQUE

(30) Priority: 10.11.2020 CN 202022590643 U
(43) Date of publication of application: 29.03.2023
(73) Proprietor: Zhejiang CFMOTO Power Co., Ltd., Hangzhou, Zhejiang 311100 (CN)
(72) Inventor: LIAO, Ke, Hangzhou, Zhejiang 310000 (CN); JIN, Yuqiang, Hangzhou, Zhejiang 310000 (CN); MA, Chengxu, Hangzhou, Zhejiang 310000 (CN); ZHENG, Xiaodong, Hangzhou, Zhejiang 310000 (CN); GAO, Jifeng, Hangzhou, Zhejiang 310000 (CN); LI, Kun, Hangzhou, Zhejiang 310000 (CN); JIANG, Feijie, Hangzhou, Zhejiang 310000 (CN); DENG, Rui, Hangzhou, Zhejiang 310000 (CN); NIE, Qiang, Hangzhou, Zhejiang 310000 (CN); YANG, Zeshan, Hangzhou, Zhejiang 310000 (CN); WAN, Xianlin, Hangzhou, Zhejiang 310000 (CN); CHEN, Tao, Hangzhou, Zhejiang 310000 (CN); CHEN, Zhiyong, Hangzhou, Zhejiang 310000 (CN)
(74) Representative: Sun, Yiming
(86) International application number: PCT/CN2020/142586
(87) International publication number: WO 2022/099910

(56) References cited:
- WO-A1-2012/085976
- WO-A1-2020/188706
- CN-A- 103 502 090
- CN-A- 104 443 213
- CN-A- 110 228 552
- CN-U- 205 837 073
- IT-B1- 1 386 775
- US-A1- 2008 236 925
- US-A1- 2014 305 729

## Description

### FIELD OF THE DISCLOSURE

The disclosure relates to the field of electric motorcycle.

### BACKGROUND OF THE DISCLOSURE

The electric motorcycle is one of the electric vehicles, which provides electric power to the electric motor by a battery pack with electricity stored, and then the electric motor drives the rear wheel of the electric motorcycle to rotate, so that the electric motorcycle can run on the ground.

WO2020188706 discloses the preamble of claim 1.

The national standard General Technical Conditions for Electric Motorcycles and Electric Mopeds (hereinafter referred to as the "electric motorcycle standard") was issued on June 25, 2009 and implemented on January 1, 2010. According to this standard, two or three wheeled vehicles with a maximum design speed of greater than 20 km/h and less than 50 km/h and driven by electricity are called mopeds or electric motorcycles, and electric motorcycles or mopeds are included in the category of motor vehicles.

The maximum speed of the electric motorcycle is below 50 km/h. At this speed, the vibration frequency of the electric motorcycle is small, and the requirements for the vehicle body strength and battery endurance are small. However, when the speed of the electric motorcycle is increased to greater than 50 km/h, the vibration frequency of the electric motorcycle increases, and the requirements for the vehicle body strength and the power storage capacity of the battery are high.

In order to meet the requirements that the speed of the electric motorcycle is greater than 50 km/h, it is necessary to improve the vehicle body strength of the electric motorcycle and the safety and controllability of the electric motorcycle when it runs at the highest speed.

### SUMMARY OF THE INVENTION

The object of the disclosure is to provide an electric motorcycle with improved safety when running at a speed of greater than 50 km/h.

An electric motorcycle includes a frame, a front wheel, a rear wheel, a front suspension, a rear suspension, a steering system, an electric motor, a battery pack, a charging device, a controller, a plurality of seats, a dashboard panel, a front cowling, a plurality of lights, a side box, and a vehicle cover. The battery pack, the controller and the charging device are all disposed on the frame. The battery pack provides electric power for the electric equipment on the electric motorcycle, and the charging device converts the electric energy of the public grid into DC to charge the battery pack. The controller is connected to the electric motor by wires, and the controller controls the electric motor.

According to the invention, the battery pack, the controller and the charging device are arranged in sequence along the height direction of the frame. The battery pack and the charging device are positioned on the frame adjacent to the front wheel. The controller is arranged on the battery pack. The electric motorcycle is more compact and the center of gravity of the electric motorcycle is lower. Therefore, the electric motorcycle can run stably even at a maximum speed of 120 km/h.

According to the invention, the battery bank comprises a battery and a battery case, the battery is arranged within the battery case. The battery case is connected to the frame. The battery case is connected to the frame to enhance the strength of the frame. The structure of the battery bank on the frame is compact, improving the stability of the electric motorcycle.

Optionally, the frame comprises a front frame adjacent to the front wheel and a rear frame adjacent to the rear wheel, the side of the battery case adjacent to the front wheel is connected to the front frame, and the side of the battery case adjacent to the rear wheel is connected to the rear frame.

Optionally, the side of the battery case adjacent to the front wheel is provided with a first connection seat, a second connection seat and a third connection seat. The side of the battery case adjacent to the rear frame is provided with a fourth connection seat and a fifth connection seat. The front frame is connected to the first connection seat, the second connection seat and the third connection seat by shafts. The rear frame is connected to the fourth connection seat and the fifth connection seat by shafts.

Optionally, the battery case comprises a body case and a plurality of side plates which are fixed on the body case by bolts.

Optionally, the side plates are provided with a plurality of ribs. The ribs increase the surface area of the battery case and improve the heat dissipation of the battery bank. At the same time, the strength of the battery case is enhanced, thereby improving the safety of the electric motorcycle.

Optionally, the bottom of the battery case is provided with a plurality of indentations, a cushion block is arranged between two adjacent indentations, the upper end surface of the cushion block is flat with the upper end surface of the indentation.

Optionally, a plurality of holes is arranged on each cushion block.

Optionally, the electric motorcycle is provided with a cooling air passage for cooling the battery bank. The heat can be quickly dissipated from the battery bank, which can make the working temperature of the battery bank within the preset range and reduce the electricity loss of battery bank when the electric motorcycle is running at high speed, thereby ensuring the safety and endurance of the electric motorcycle.

Optionally, the cooling air passage is a passage formed around the battery bank and the space between the vehicle cover and the battery bank.

Optionally, the frame is provided with a water-cooling device, which includes a water tank, a water pump connected to the water tank by a pipe and a cooling pipe connected to the water pump. The cooling pipe is arranged on the battery bank, and the cooling pipe is connected to a return pipe, the return pipe is connected to the water tank. The battery bank can keep running at low temperature to improve the safety of the electric motorcycle when the electric motorcycle is running at high speed.

Optionally, a plurality of radiating fins is arranged on the side wall of the water tank.

Optionally, the water-cooling device also includes a radiator fan, the radiating fan corresponds to the water tank.

Optionally, the controller is placed at one end of the battery case adjacent to the dashboard panel. The controller can keep running at low temperature to improve the safety of the electric motorcycle when the electric motorcycle is running at high speed.

Optionally, an installation site is arranged on the battery case and a groove is arranged on the installation site, the controller is installed on the installation site and fixed on the battery case by screws.

Optionally, the frame is provided with a water-cooling device, the water-cooling device includes a water tank, a cooling pipe connected to the water tank and a water pump connected to the cooling pipe, and the cooling pipe is at least partially arranged on the controller.

Optionally, the controller is provided with a coolant channel, the coolant channel is provided with an inlet and an outlet; a coolant pipe comprises a second branch pipe connected to the inlet of the coolant channel and a third branch pipe connected to the outlet of the coolant channel, and the second branch pipe is connected to a water pump, and the third branch pipe is connected to a water tank.

Optionally, a plurality of radiating fins is arranged on the side wall of the water tank.

Optionally, the water-cooling device further comprises a plurality of radiating fans arranged on the frame or the water tank, and the radiating fans corresponds to the water tank.

Optionally, the water-cooling device further comprises an auxiliary water tank arranged on the frame, the auxiliary water tank is connected to the water tank by a pipeline, and the coolant is pumped from the auxiliary water tank into the water tank through negative pressure. The coolant in the auxiliary water tank is automatically replenished to the water tank to maintain the flow of coolant through the controller and maintain the constant heat dissipation performance of the controller.

Optionally, the frame or controller is provided with a cooling fan for cooling the controller. The air inlet of the cooling fan faces toward the rear wheel, and the air outlet of the cooling fan faces toward the controller.

Optionally, the controller is provided with a wire connector. The wire connector is connected to the electric motor by cables.

Optionally, the charging device is arranged on the frame, and the controller is positioned between the charging device and the battery bank.

Optionally, the charging device is provided with a charging connector, and the charging connector faces the seats.

Alternatively, the axis along the length direction of the charging connector is defined as a straight line L1, the line connecting the center point of the front wheel and the center point of the rear wheel is defined as a straight line L2, an angle is defined by a straight line L1 and the straight line L2, and the angle is in the range from 30° to 60°.

Optionally, the charging connector is detachably connected to a sealing plug. The sealing plug is waterproof and dust-proof, protecting the charging connector from leakage, and ensuring the safety of electric motorcycle.

Optionally, the sealing plug includes a sealing plug and a plug cap, on which a connecting rope is arranged, and one end of the connecting rope is connected to the charging connector.

Optionally, a charging port corresponding to the charging connector is arranged on the vehicle cover, and a charging port cover for closing the charging port is connected to the vehicle cover. The charging port cover protects the charging connector, improving the safety of electric motorcycle.

Optionally, the surface of the charging port cover is smoothly incorporated into the surface of the vehicle cover.

Optionally, the charging port cover is connected to the vehicle cover by a locking structure, and the charging port cover is turned and opened towards the dashboard panel. The locking structure includes a connecting rod connected to one side of the charging port cover, a rotating shaft connected to the connecting rod, a torsional spring arranged on the rotating shaft, and a button arranged on the charging port cover. The rotating shaft is rotatably arranged on the vehicle cover, an elastic member is arranged between the button and a bottom plate.

Optionally, a rotating shaft mounting part is arranged on the vehicle cover, and two ends of the rotating shaft is rotatably arranged on the rotating shaft mounting part.

Optionally, a damping member is disposed on the connection between the rotating shaft and the vehicle cover.

Optionally, the charging port cover comprises a cover plate and a bottom plate, a cavity is defined by the cover plate and the bottom plate, a first recess is defined at the end of the cover plate facing the dashboard panel, a second recess is defined at the end of the cover plate facing the seats, the connecting rod is connected to the first recess, and a button is arranged in the second recess.

Optionally, the sealing plug is a part of the charging port cover. The sealing plug is a part of the charging port cover, which can be opened during charging, improving the overall strength of the vehicle.

Optionally, the charging device is provided with a cooling fan, the air inlet of the cooling fan faces the seats, and the air outlet of the cooling fan faces the interior of the charging device.

Optionally, the charging device includes at least two cooling fans, and the two cooling fans are symmetrically arranged on two sides of the charging connector, respectively. The two cooling fans are symmetrically arranged to evenly dissipate the heat from the charging device.

Optionally, the charging device is provided with a plurality of air outlets, which face toward the dashboard panel.

Optionally, the frame is provided with a water-cooling device for cooling the charging device. The water-cooling device includes a water tank, a cooling pipe connected to the water tank and a water pump connected to the cooling pipe. The cooling pipe is partially arranged on the charging device.

Optionally, a plurality of radiating fins are arranged on the side wall of the water tank.

Optionally, the water-cooling device further includes a radiating fan for cooling the water tank arranged on the frame or the water tank.

Optionally, the water-cooling device further comprises an auxiliary water tank arranged on the frame, the auxiliary water tank is connected to the water tank by a pipeline, and the coolant is pumped from the auxiliary water tank into the water tank through negative pressure. The coolant in the auxiliary water tank is automatically replenished to the water tank to maintain the heat dissipation performance of the water-cooling device for the controller.

According to the invention, the rear suspension includes a rear fork and a shock absorber connected to the frame by a shaft, the rear fork is connected to the rear wheel, and the electric motor is arranged on the rear fork. The electric motor then moves synchronously with the rear fork, and the tightness of the timing belt remains unchanged. When the electric motorcycle runs at a speed of 120 km/h, the safety of the electric motorcycle can be guaranteed.

Optionally, the electric motor is arranged on the end of the rear fork away from the rear wheel.

Optionally, the rear fork includes two symmetrical support plates, and the electric motor is positioned between the two support plates.

Optionally, one end of the rear fork is movably connected to a connecting lugs on the battery case by shafts.

Optionally, the shock absorber includes a telescopic rod and a shock absorption spring sleeved on the telescopic rod. One end of the telescopic rod is connected to the connecting lugs by shafts, and the other end is connected to the rear fork by shafts.

Optionally, the telescopic rod includes a sleeve, a rod body and a joint connected to the rod body. The joint is connected to the connecting lugs by shafts, and the rod body is inserted into the sleeve.

Optionally, the sleeve body is provided with a first stopper, and the rod body is provided with a second stopper. One end of the damping spring is connected to the first stopper, and the other end is connected to the second stopper.

Optionally, the telescopic rod body is provided with an elastic shock pad.

Optionally, the rear fork is fixed with a rear fender by screws, and the rear fender corresponds to the rear wheel.

Optionally, one end of the rear fender is connected to the rear fork, and the other end is suspended in midair; the rear fender portion is folded to form a connection part, and the connection part is connected to the rear fork by screws.

Optionally, the electric motorcycle further includes a steering system, the steering system comprises a steering handle, an electronic-controlled throttle and a switch assembly are arranged on the steering handle, wherein the switch assembly is provided with a first operation area, a second operation area and a third operation area that are able to be operated easily by the thumb, the switch assembly is also provided with a fourth operation area that is able to be operated by the index finger.

Optionally, a cutting plane is made along the thickness direction of the switch assembly, an origin point is defined as the center point of the cavity of the switch assembly on the steering handle, a x-axis is defined as the length direction of the electric motorcycle, and a y-axis is defined as the height direction of the electric motorcycle, and the projection of the first operation area on the cutting plane coordinate system xoy is in the scanning area of -45- 0°.

Optionally, a cutting plane is made along the thickness direction of the switch assembly, an origin point is defined as the center point of the cavity of the switch assembly on the steering handle, an x-axis is defined as the length direction of the electric motorcycle, and a y-axis is defined as the height direction of the electric motorcycle, and the projection of the second operation area on the cutting plane coordinate system xoy is in the scanning area of 0- 45°.

Optionally, a cutting plane is made along the thickness direction of the switch assembly, an origin point is defined as the center point of the cavity of the switch assembly on the steering handle, an x-axis is defined as the length direction of the electric motorcycle, and a y-axis is defined as the height direction of the electric motorcycle, and the projection of the third operation area on the cutting plane coordinate system xoy is in the scanning area of 45- 90°.

Optionally, a cutting plane is made along the thickness direction of the switch assembly, an origin point is defined as the center point of the cavity of the switch assembly on the steering handle, an x-axis is defined as the length direction of the electric motorcycle, and a y-axis is defined as the height direction of the electric motorcycle, and the projection of the fourth operation area on the cutting plane coordinate system xoy is in the scanning area of 90- 135°.

Optionally, the first operation area is provided with a horn button and a turn signal light button.

Optionally, the first operation area is also provided with a photographing button.

Optionally, the second operation area is provided with a power assisted pushing button and a shift button.

Optionally, the third operation area is provided with a multifunction button and a loudspeaker on/off button.

The multifunction button includes a lifting button and a switching button. The lifting button is provided with a concave portion, and the switching button is partially inserted into the concave portion after the switching button moves toward the steering handle.

Optionally, the fourth operation area is provided with a high beam light on/off button.

A front cowling is arranged on the frame, and a windshield is arranged on the front cowling. The windshield is fitted with the front cowling, and the lifting button controls the lifting of the windshield.

Optionally, the middle of the windshield protrudes along the direction of the rear wheel towards the shroud, forming an arched section.

Optionally, the front cowling is provided with a windshield, which is fitted with the windshield, thereby forming a middle projection, and two sides is arranged to the side opposite to the middle projection.

Optionally, the windshield is liftable and arranged on the front cowling.

The side box includes a box body and a box cap. The frame is provided with a rear shroud and/or a center guard plate, and the box body is a part of the rear tail shroud or the center guard. The box body and rear tail shroud is integrated to improve the strength of the whole vehicle and reduce the wind resistance.

Optionally, an accommodating cavity is formed on the box body, an annular bulge is arranged along the circumferential wall of the accommodating cavity, and a locking structure is arranged on the annular bulge.

Optionally, the locking member is provided with a side box locating opening, the locking member is also provided with a locating member opening in communication with the side box locating opening, and a semicircular notch is defined by the side box locating opening and the locating member opening jointly; a drive member drives the locating member to enter the side box locating opening from the side box locating member opening, or enter the side box locating member opening from the side box locating opening.

Optionally, a rear bumper corresponding to the side box is arranged on the side of the frame adjacent to the rear wheel.

Optionally, the rear bumper is provided with a buffer structure.

Optionally, the buffer structure is a rubber pad arranged on the frame.

Optionally, the length of the rear bumper along the width of the motorcycle is greater than the width of the side box.

Optionally, the rear bumper is provided with a buffer structure.

Optionally, the frame is provided with a rear trunk, which includes a trunk and a trunk cap movably connected to the rear trunk.

Optionally, the rear trunk is provided with a cushion.

Optionally, the frame is provided with a rear seat and a backrest assembly associated with the rear seat.

Optionally, the backrest assembly includes a backrest cushion and a backrest cushion bracket connected to the backrest cushion. The backrest cushion is connected to the backrest cushion bracket, and the backrest cushion bracket is connected to the frame.

Optionally, the backrest cushion bracket may at least include two cushion armrests and a backrest cushion connecting frame arranged on two sides of the backrest cushion bracket. The cushion armrests may be symmetrically arranged on both sides of the backrest cushion, and one end of the cushion armrests is connected to the backrest cushion connecting frame, and the other end is connected to the frame.

Optionally, the backrest cushion may at least include a backrest cushion body and a backrest cushion connecting plate arranged on the backrest cushion body, and the backrest cushion connecting plate is connected to the backrest cushion frame.

Optionally, the front frame is provided with a front bumper adjacent to the front wheels, and the front bumper is a straight bar.

Optionally, the front bumper is provided with a buffer member, which is an elastic structure.

Optionally, the front bumper includes a tube body and a rod body connected to the front frame, a cavity is arranged on the tube body, a second reinforce rod body is inserted into the cavity, and a buffer spring is arranged in the cavity, and one end of the buffer spring is connected to the rod body.

The front frame is provided with a battery bumper for protecting the battery case.

Optionally, the battery bumper includes a first bumper body, a first connector connected to the first bumper body, a second bumper body and a second connector connected to the second bumper body, wherein the first connector and the second connector is connected by screws; the first bumper body is connected to one side of the front frame, and the second bumper body is connected to the other side of the frame.

Optionally, a front bumper is arranged on the front frame, and the front bumper is a bar.

Optionally, the front bumper is provided with a buffer member, which is an elastic structure.

Optionally, the front frame is provided with a connecting block, the front bumper is connected to one side of the connecting block by screws, and the battery bumper is connected to the other side of the connecting block by screws.

Optionally, the front frame is connected to the rear frame by a reinforce bracket, and the charging device is arranged on the reinforce bracket.

Optionally, the controller is arranged between the battery case and the reinforce bracket.

The reinforce bracket comprises two reinforce rods symmetrically arranged and a brace rod connecting the two reinforce rods. each reinforce rod comprises a first reinforce rod body along the length direction of the electric motorcycle, a second reinforce rod body along the height direction of the frame, a bent rod part connecting the first reinforce rod body and the second reinforce rod body, and a connecting rod part connecting the second reinforce rod body, the connecting rod part is connected to the rear frame, and the first reinforce rod body is connected to the front frame.

Optionally, a support scaffold is arranged on the front frame, and a plurality of lights are arranged on the support scaffold.

Optionally, the rear wheel comprises a wheel hub and a pulley arranged on the wheel hub, and the pulley is provided with a hard layer, and the hard layer is a part of the pulley.

Optionally, the thickness of the hard layer is 30 µ m-60 µ m.

Optionally, the thickness of the hard layer is 40 µ m-50 µ m.

The disclosure has the following advantages. The battery pack, the controller and the charging device are arranged on the frame adjacent to the front wheel. The electric motorcycle has a compact structure and high structural strength. The wind resistance is smaller and the electric motorcycle is more safely when the electric motorcycle runs at the maximum speed of 120km/h.

The battery pack, the controller and the charging device are arranged on the frame adjacent to the front wheel. The center of gravity of the electric motorcycle is adjacent to the front, and the electric motorcycle can run stably even at a maximum speed of 120 km/h.

The electric motor is positioned on the rear fork, and the electric motor and the rear fork move up and down synchronously, so that there is no speed difference when the timing belt drives, so that the rear wheel and the front wheel can be kept on the same plane, so that the electric motorcycle can reach a speed of 120 km/h or even more.

### BRIEF DESCRIPTION OF THE DRAWINGS

FIG. 1 is a perspective view of the electric motorcycle of the present disclosure.
FIG. 2 is another perspective view of the electric motorcycle of the present disclosure.
FIG. 3 is a perspective view of the electric motorcycle of FIG. 1 without a vehicle cover.
FIG. 4 is a perspective view of the frame of the electric motorcycle.
FIG. 5 is another perspective view of the frame of the electric motorcycle.
FIG. 6 is a perspective view of the battery pack.
FIG. 7 is a cross-sectional view of a battery.
FIG. 8 is a perspective view of a water-cooling radiator for a battery pack.
FIG. 9 is a perspective view of a part of the structure in FIG. 8.
FIG. 10 is a perspective view of a water-cooling radiator for a controller.
FIG. 11 is a perspective view of a part of the structure in FIG. 10.
FIG. 12 is a perspective view of an air-cooling radiator for a battery pack.
FIG. 13 is a perspective view of a charging device of the electric motorcycle.
FIG. 14 is another perspective view of the charging device of the electric motorcycle.
FIG. 15 is a cross-sectional view of the charging device.
FIG. 16 is a cross-sectional view of a charging connector and a charging port cover of the electric motorcycle.
FIG. 17 is a perspective view of a charging device, a plug cap, and a charging port cover of the electric motorcycle.
FIG. 18 is a perspective view of a water-cooling radiator for a charging device.
FIG. 19 is a partially perspective view of the structure in FIG. 18.
FIG. 20 is a perspective view of a water-cooling radiator for a controller and the electric motor.
FIG. 21 is a perspective view of a water-cooling device of the electric motorcycle.
FIG. 22 is a perspective view of a part of the structure in FIG. 21.
FIG. 23 is a perspective view of a water-cooling radiator for an electric motor.
FIG. 24 is a perspective view of a part of the structure in FIG. 23.
FIG. 25 is a perspective view of a front bumper and a battery bumper.
FIG. 26 is an exploded view of FIG. 25.
FIG. 27 is a cross-sectional view of the front bumper.
FIG. 28 is a perspective view of a kickstand of the electric motorcycle.
FIG. 29 is a perspective view of a rear suspension of the electric motorcycle.
FIG. 30 is another perspective view of the rear suspension of the electric motorcycle.
FIG. 31 is a cross-sectional view of a shock absorber of the electric motorcycle.
FIG. 32 is a perspective view of a lifting structure, a windshield plate and a windshield.
FIG. 33 is a perspective view of the lifting structure.
FIG. 34 is an exploded view of a steering handle of the electric motorcycle.
FIG. 35 is a top view of a switch assembly of the electric motorcycle.
FIG. 36 is a perspective view of the switch assembly of the electric motorcycle.
FIG. 37 is another perspective view of the switch assembly of the electric motorcycle.
FIG. 38 is an exploded view of rear fork covering plate.
FIG. 39 is a perspective view of a side box of the electric motorcycle.
FIG. 40 is an exploded view of the side box of the electric motorcycle.

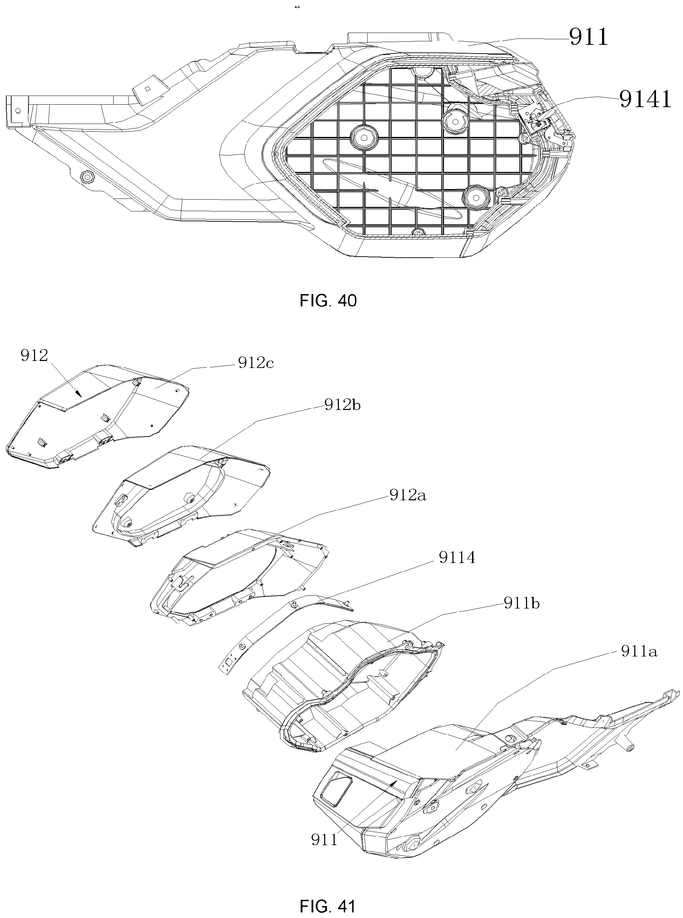

FIG. 40 is another exploded view of the side box of the electric motorcycle.

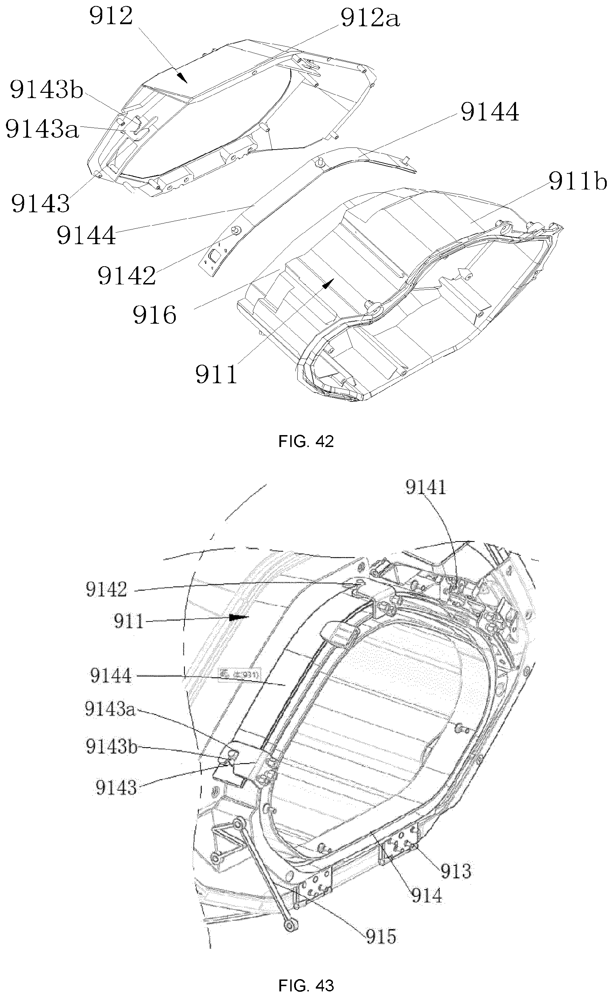

FIG. 42 is an exploded view of a part of the structure in FIG. 41.

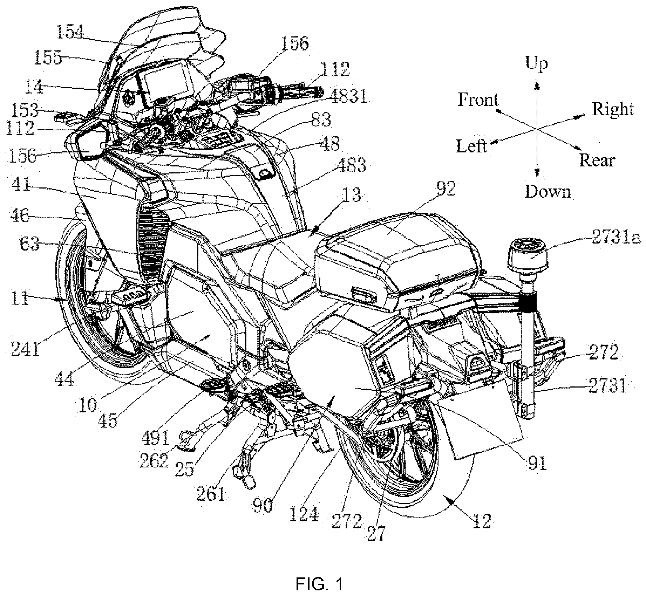

FIG. 43 is a view of the structure of a side box body in FIG. 1.

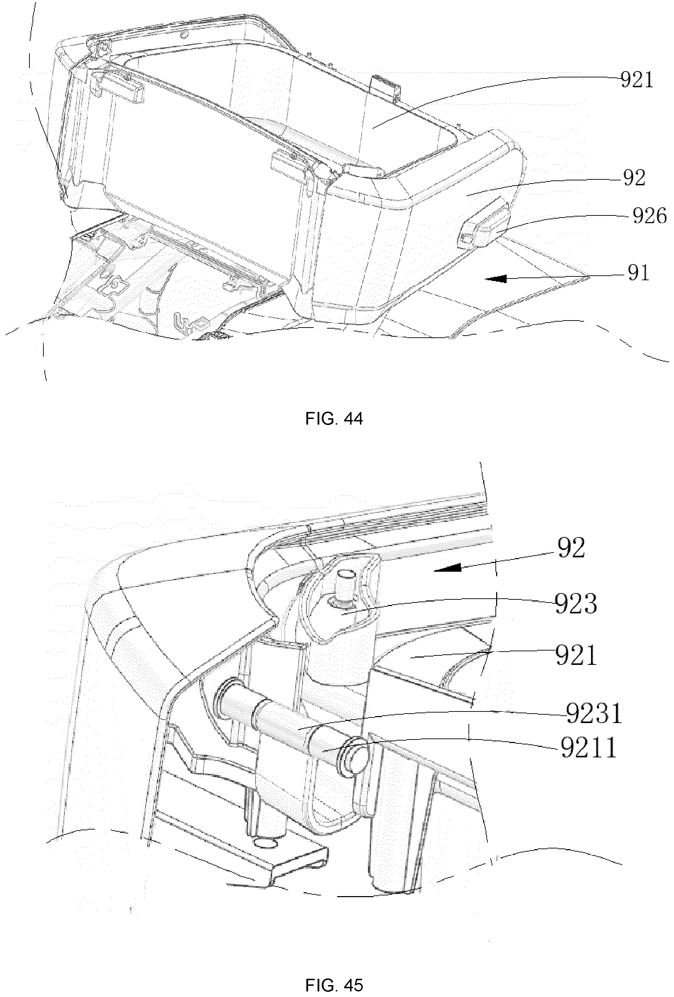

FIG. 44 is a perspective view of a rear trunk of the electric motorcycle in FIG. 1.
FIG. 45 is a perspective view of a hinge assembly for the rear trunk in FIG. 1.

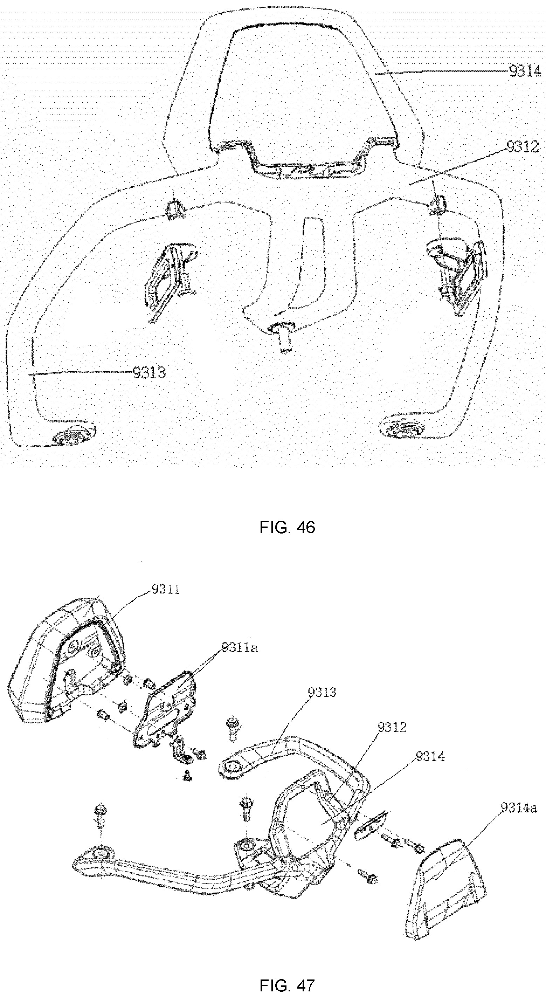

FIG. 46 is a perspective view of a backrest assembly of the electric motorcycle in FIG. 1.
FIG. 47 is an exploded view of the backrest assembly of the electric motorcycle in FIG. 1.

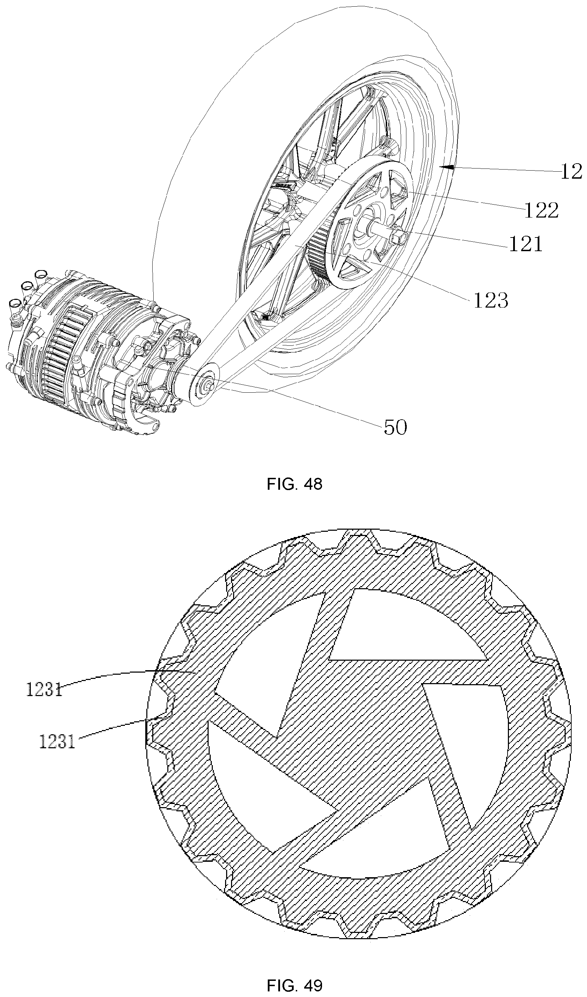

FIG. 48 is a perspective view of a timing belt, an electric motor and a rear wheel in FIG. 1.
FIG. 49 is an exploded view of a pulley of the electric motorcycle in FIG.48.

### DETAILED DESCRIPTION

For a better understanding of the purpose, technical solutions and advantages of the present disclosure, preferred embodiments of the present disclosure are described and illustrated below. In the following description, the directions of front, rear, left, right, up and down are based on the driver on the electric motorcycle and shown in FIG. 1.

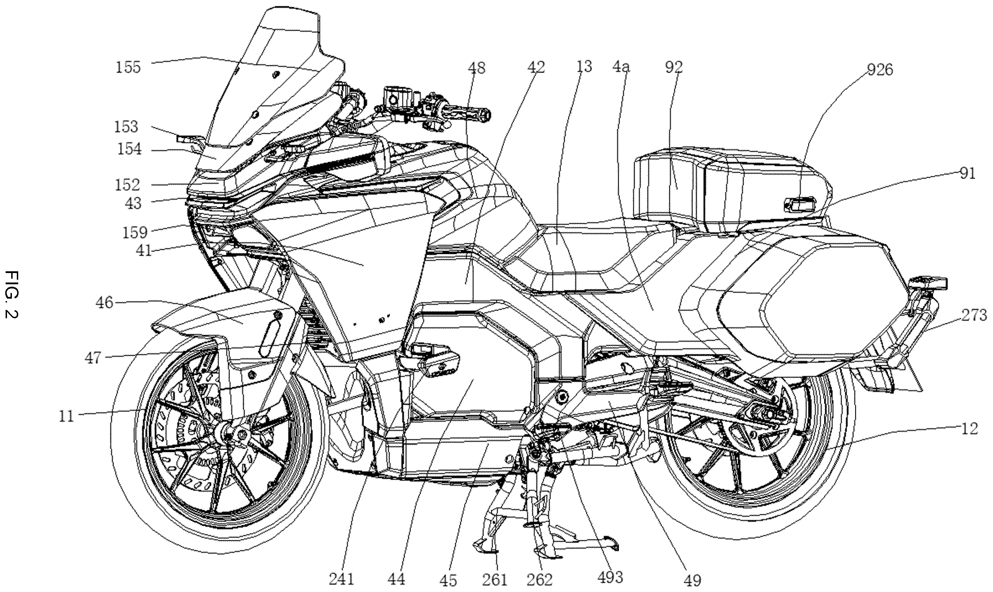

FIG. 1 is a perspective view of the electric motorcycle from the back to the front. FIG. 2 is another perspective view of the electric motorcycle.

In FIG. 1 and FIG. 2, in some embodiments, an electric motorcycle 10 includes a frame 20, a front wheel 11, a rear wheel 12, a plurality of seats 13, a dashboard panel 14, a front suspension 31, a rear suspension 32, a vehicle cover 40, an electric motor 50, a battery pack 60, a controller 70, a charging device 80, a rear side-box assembly 90, a braking system 100, a front cowling 43, and a steering system 110. The battery pack 60 and the controller 70 are respectively arranged on the frame 20. The battery pack 60 supplies electric power for the controller 70 and the motor 50. The controller 70 controls the electric motor 50 to drive the rear wheel 12 to rotate. The charging device 80 is arranged on the frame 20. The charging device 80 is connected to the public supply system by wires, so as to convert the AC from the public supply system into DC to charge the battery pack 60.

In FIGS. 1-3, the battery pack 60, the controller 70 and the charging device 80 are arranged in sequence along the height direction of the frame 20, and the vertical dimension from the charging device 80 to the dashboard panel 14 is less than the vertical dimension from the battery pack 60 to the dashboard panel 14. The battery pack 60, the controller 70 and the charging device 80 are arranged on the frame 20 adjacent to the front wheel 11. The position for placing the battery pack 60, controller 70 and charging device 80 on the frame corresponds to the position of the fuel tank on the fuel motorcycle. Thus, the electric motorcycle 10 is more compact. The center of gravity of electric motorcycle 10 is concentrated on the half adjacent to the front wheel 11, and the center of gravity is lower. The electric motorcycle can run stably and safely even at a maximum speed of 120 km/h. The volume of electric motorcycle 10 can be smaller and the wind resistance can be reduced, thereby improve the controllability of electric motorcycle while achieving high endurance.

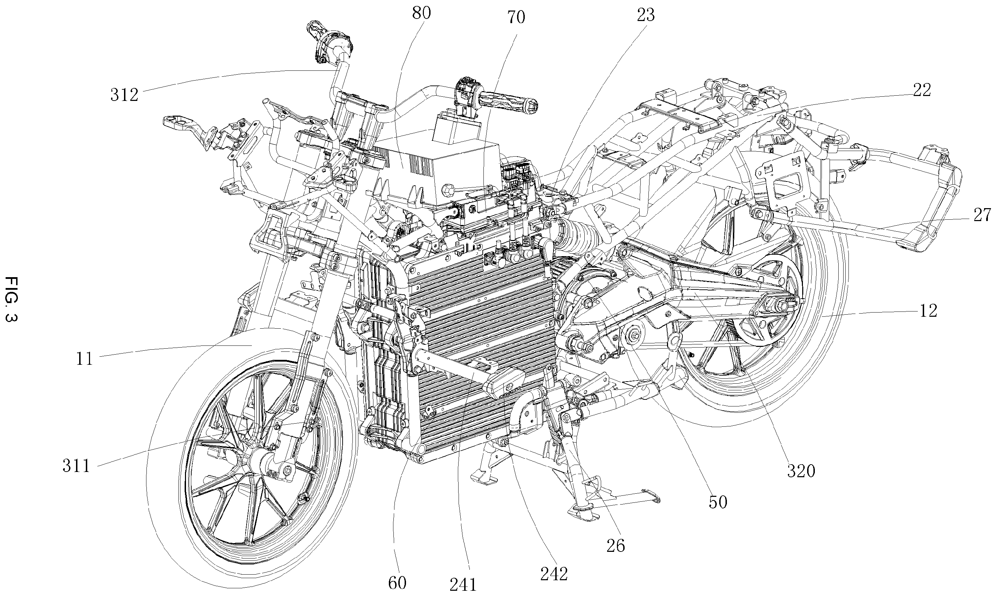

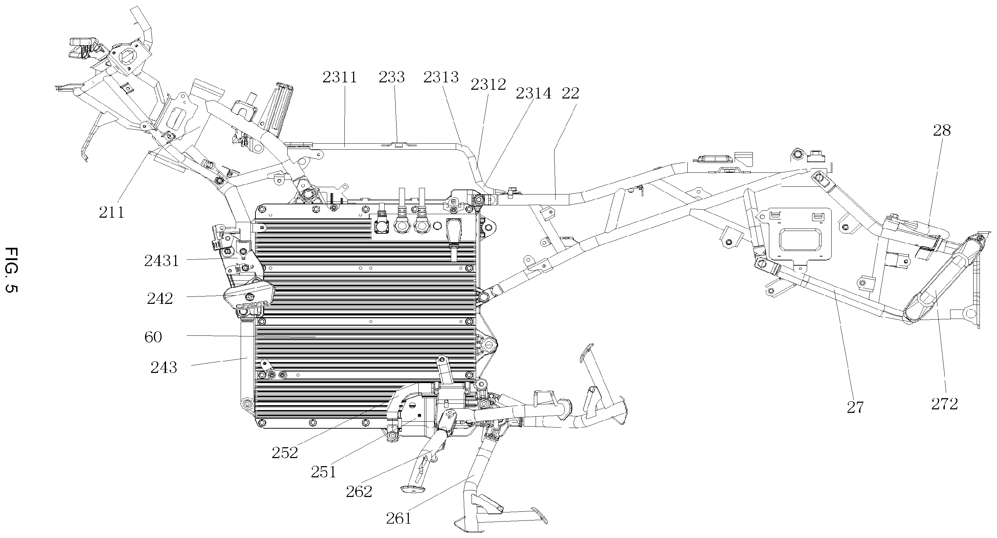

In FIGs. 3-7, the battery pack 60 includes a battery 61 and a battery case 62. The battery 61 is arranged in the battery case 62. The battery case 62 is connected to the frame 20. The battery case 62 enhances the strength of the frame 20 and improves the firmness of the electric motorcycle 10.

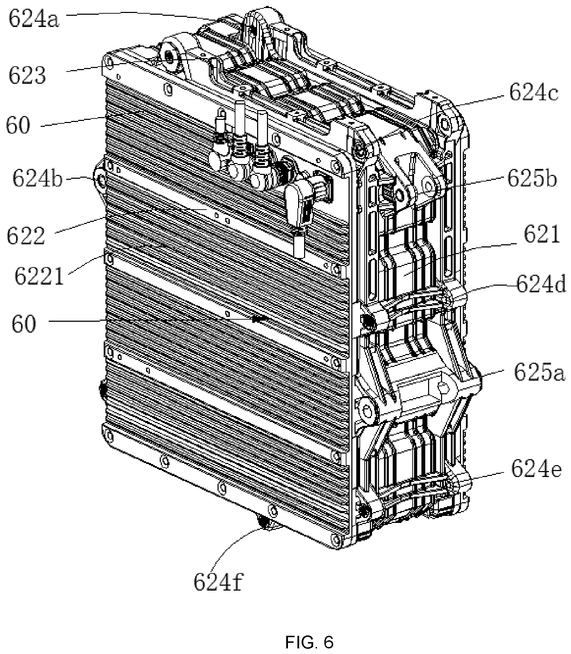

In FIGs. 6-7, in some embodiments, the battery case 62 includes a body case 621 and a plurality of side plates 622, which are fixed to the body case 621 by screws. The side plates are provided with a plurality of ribs 6221. The ribs 6221 increase the surface area of the battery case 62 and improve the heat dissipation of the battery pack 60. At the same time, the strength of the battery case 62 is enhanced, thereby improving the safety of the electric motorcycle 10.

In FIGs.6-7, in some embodiments, the bottom of the body case 621 is provided with a plurality of indentations 6211. In this embodiment, the number of indentations 6211 is three. A cushion block 6212 having a plurality of holes is arranged between two adjacent indentations 6211. The upper end surface of the cushion block 6212 is flat with the upper end surface of the indentation 6211. The battery 61 is arranged in the body case 621 and is supported by the indentations 6211 and the cushion blocks 6212.

In FIG. 1 and FIG. 2, the electric motorcycle is provided with a cooling air passage 63 for cooling the battery pack 60. A cooling air passage 63 is a passage formed around the battery pack 60 and a space between the vehicle cover 40 and the battery pack 60. The heat can be quickly dissipated from the battery pack 60 via the cooling air passage 63, which can make the working temperature of the battery pack within the preset range and reduce the electricity loss of battery pack when the electric motorcycle is running at high speed, thereby ensuring the safety and endurance of the electric motorcycle.

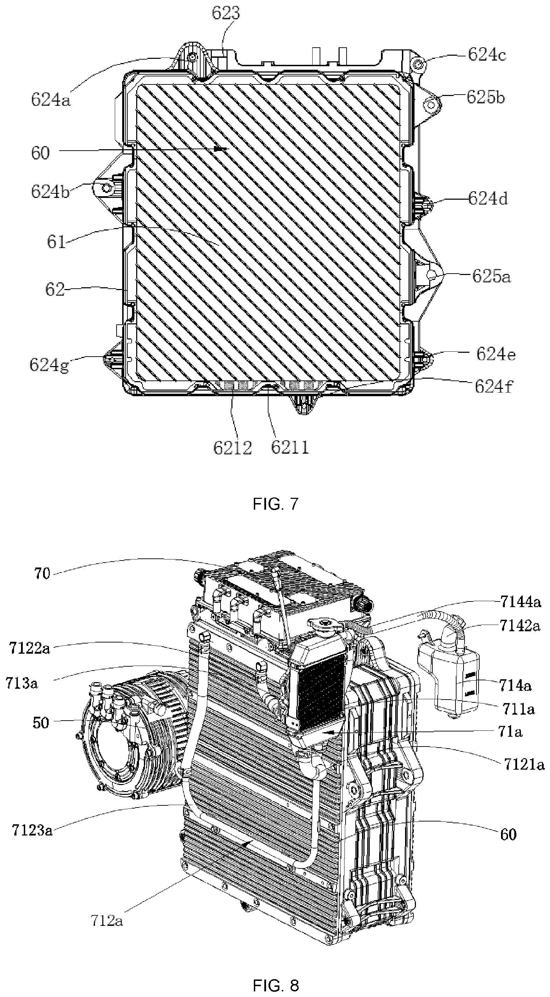

In FIGs. 8-9, in other embodiments, the battery pack 60 is also be cooled down by a radiator 71a. Water-cooling can make the battery pack 60 rapidly cooled down at high temperatures, and the battery pack 60 can work normally and efficiently. The radiator 71a includes a water tank 711a, a radiating pipe 712a connected to the water tank 711a, and a water pump 713a in fluid communication with the radiating pipe 712a. The radiating pipe 712a is partially arranged on the battery pack 60. The radiating pipe 712a includes a first branch pipe 7121a, a second branch pipe 7122a and a third branch pipe 7123a. One end of the first branch pipe 7121a is in fluid communication with the outlet of the water tank 711a, and the other end is in fluid communication with the inlet of the water pump 713a. One end of the second branch pipe 7122a is in fluid communication with the outlet of the water pump 713a, and the other end is in fluid communication with the inlet of the battery pack 60. The third branch pipe 7123a is in fluid communication with the outlet of the battery pack 60, and the other end is in fluid communication with the return end of the water tank 711a, and the third branch 7123a is partially fixed on the battery pack 60.

In FIGs. 8-9, a plurality of radiating fins 7112a are arranged on the side wall of water tank 711a. The radiating fins 7112a increases the contact area between battery case and air to improve heat dissipation effect.

In FIGs. 8-9, the radiator 71a also includes a radiating fan 7113a, which is arranged on one side of the water tank 711a. The fan bracket 7114a is fixed on the water tank 711a by screws, and the radiating fan 7113a is arranged on the fan bracket 7114a. The air inlet of the radiating fan 7113a faces toward the seats 13, and the air outlet of the radiating fan 7113a faces toward the dashboard panel 14. When the radiating fan 7113a works, the air flow generated by the radiating fan 7113a flows towards the water tank 711a, which improves heat dissipation efficiency of the water tank 711a and keeps the coolant in the water tank 711a at a low temperature, thereby improving the cooling efficiency of the coolant for the battery pack 60 and further improving the safety of the electric motorcycle 10 at high speed.

In FIGs. 8-9, the radiator 71a also includes an auxiliary water tank 714a arranged on the frame 20. The auxiliary water tank 714a is in fluid communication with a liquid delivery pipe 7144a, and the liquid delivery pipe 7144a is in fluid communication with the water tank 711a. A negative pressure is formed in the water tank 711a when the volume of the coolant in the water tank 711a decreases. The coolant in the auxiliary water tank 714a can be delivered to the water tank 711a by the liquid delivery pipe via the negative pressure. The auxiliary water tank 714a can keep the coolant content in the water tank 711a unchanged, maintains the cooling performance of the coolant to the battery pack 60, and ensures the safety of the electric motorcycle 10 when driving.

In FIGs. 6, in some embodiments, the controller 70 is positioned between the charging device 80 and the battery pack 60. The controller is provided with a wire connector, which is connected to the electric motor through cables. The controller 70 is arranged on the battery case 62, and the controller 70 is positioned at one end of the battery case 62 adjacent to the dashboard panel 14. An installation portion 623 having a groove is arranged on the battery case 62. The controller is installed in the groove and fixed on the battery case 62 by screws.

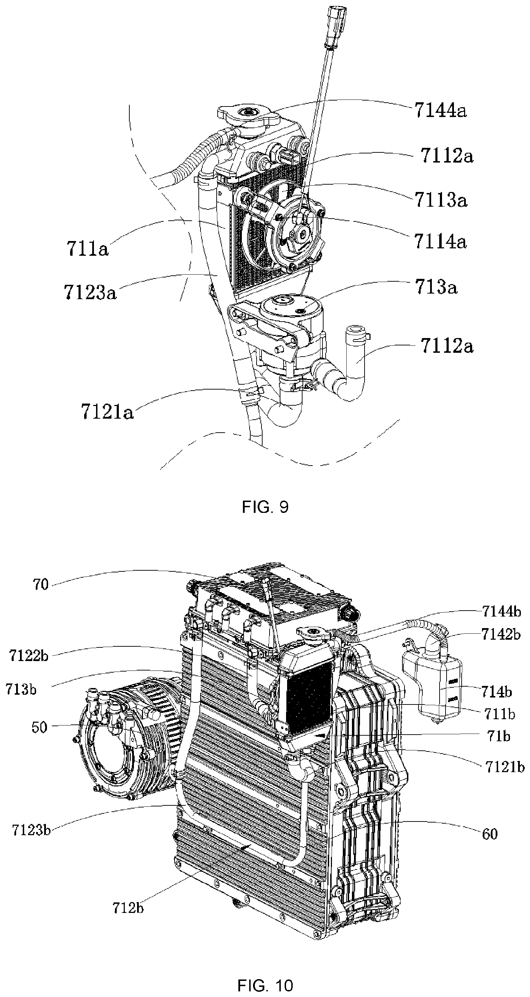

In FIGs. 10-11, in some embodiments, the frame 20 is provided with a cooling device 71b for cooling the controller 70. The cooling device 71b includes a cooling box 711b, a coolant pipe 712b in fluid communication with the cooling box 711b, and a pump body 713b in fluid communication with the coolant pipe 712b. The coolant in the coolant pipe 712b is also flows through the controller 70. The coolant pipe 712b includes a first branch pipe 7121b, a second branch pipe 7122b and a third branch pipe 7123b. One end of the first branch pipe 7121b is in fluid communication with the outlet of the cooling box 711b, and the other end is in fluid communication with the inlet of the pump body 713b. One end of the second branch pipe 7122b is in fluid communication with the outlet of the pump body 713b, and the other end is in fluid communication with the inlet of the controller 70. The third branch pipe 7123b is in fluid communication with the outlet of the controller 70, and the other end is in fluid communication with the return end of the cooling box 711b, and the third branch pipe 7123b is partially fixed on the battery pack 60.

In FIGs. 10-11, the side wall of the cooling box 711b also includes a plurality of radiating fins 7112b and a radiating fan 7113b. The radiating fan 7113b is used to cooling the cooling box 711b. The radiating fan 7113b and the radiating fins 7112b is arranged on the same side. The radiating fan 7113b is installed on the cooling box 711b by a fan bracket 7114b to cool the cooling box 711b, which improves the heat dissipation efficiency of the radiating fins 7112b. The air inlet of the radiating fan 7113b faces toward the seats 13, and the air outlet of the radiating fan 7113a faces toward the dashboard panel 14. After the radiating fan 7113b is started, the airflow generated flows from the side adjacent to the seats 13 to the side far away from the seats 13, so as to avoid hot air blowing directly to the driver.

In FIGs. 10-11, the cooling device 71b may further include an auxiliary water tank 714b arranged on the frame 20. The auxiliary water tank 714b is in fluid communication with a liquid delivery pipe 7144b, and the liquid delivery pipe 7144b is in fluid communication with the cooling box 711b. A negative pressure is formed in the cooling box 711b when the amount of coolant in the cooling box 711b decreases. The coolant in the auxiliary water tank 714b is delivered to the cooling box 711b by the liquid delivery pipe under the negative pressure of the cooling box 711b. The auxiliary water tank 714b can keep the coolant content in the cooling box 711b unchanged, maintains the cooling performance of the coolant to the battery pack 60, and ensures the safety of the electric motorcycle 10 when driving.

Please continue to refer to FIGs. 10-11, in other embodiments, the coolant in the coolant pipe 712b also flows through the battery pack 60.

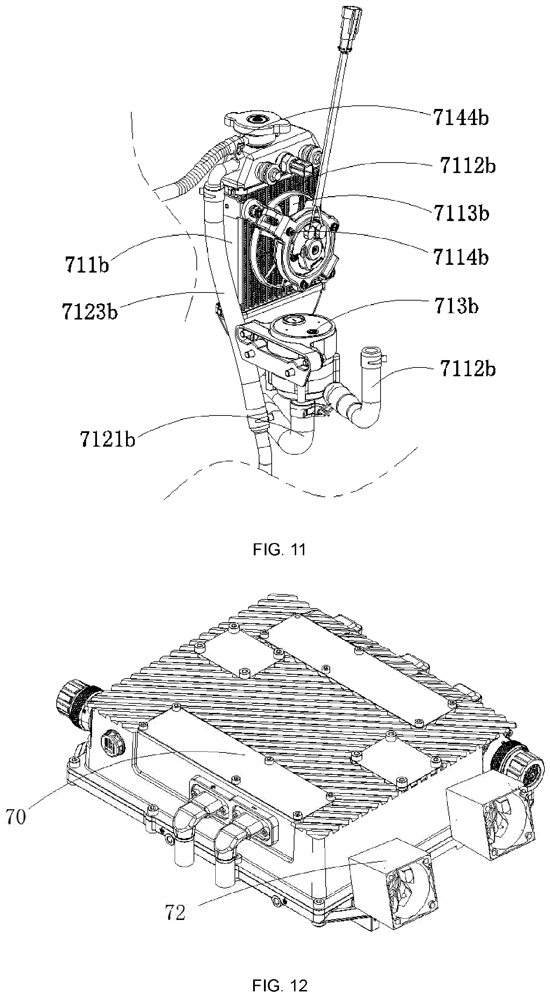

In FIG. 12, in other embodiments, a plurality of cooling fans 72 are arranged on the frame 20. The air inlets of the cooling fans 72 face toward the rear wheel 12, and the air outlets of the cooling fans 72 face toward the front wheel 11. The air from the air outlets blows to the controller 70. The cooling fans 72 conduct air-cooling for the controller 70. The air inlet faces toward the rear wheel 12, which makes the air flow towards the front wheel 11 to avoid hot air blowing directly to the driver.

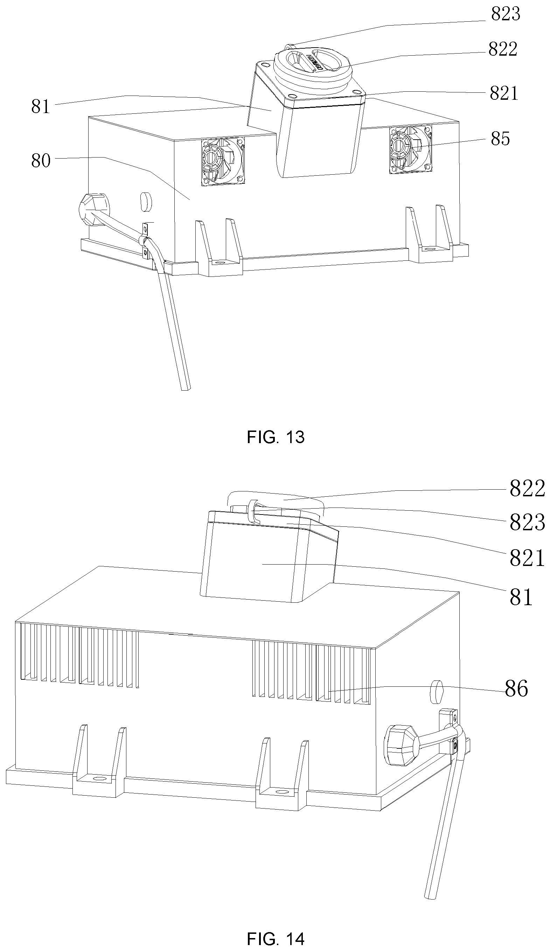

In FIGs. 13-15, in some embodiments, the charging device 80 is arranged on the frame 20, and the charging device 80 is positioned on the frame 20 adjacent to the seats 13. The charging device 80 is provided with a charging connector 81, which faces toward the opposite direction of the front cowling 141. The charging connector 81 is positioned on the side of the charging unit 80 away from the controller 70, and is positioned on the side of the seats 13 toward the dashboard panel 14.

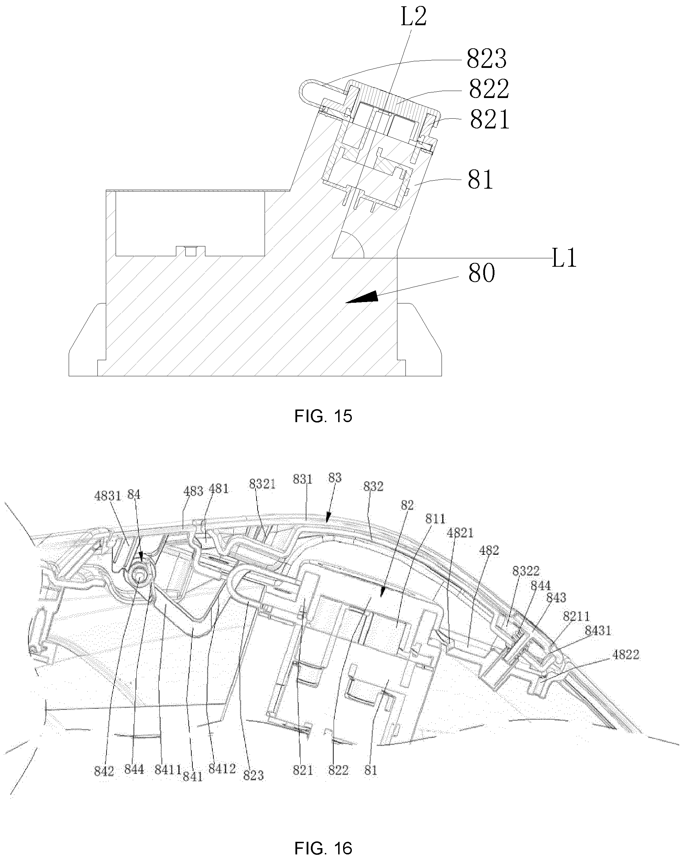

In FIG. 16, in some embodiments, the charging device 80 is provided with a charging connector 81, the charging connector 81 is provided with a charging interface 811, and the opening of the charging interface 811 faces toward the seats 13.

In FIG. 15, in some embodiments, the axis along the length direction of the charging connector 81 is defined as a straight line L1, the line connecting the center point of the front wheel and the center point of the rear wheel is defined as a straight line L2, an angle is defined by a straight line L1 and the straight line L2, and the angle is in the range from 30° to 60°.

In FIGs. 13-15, in some embodiments, the charging connector 81 is detachably connected to a sealing plug 82. The sealing plug 82 includes a plug body 821 and a plug cap 822. The plug cap 822 is provided with a connecting rope 823, and one end of the connecting rope is connected to the charging connector 81 or the plug body 821. The plug body 821 is detachably connected to the charging connector 81. The plug cap 822 is partially inserted into the plug body 821. The plug cap 822 is provided with a ring groove on the side facing the charging connector 81. After the plug cap 822 is inserted into the plug body 821, the ring groove covers the side wall of the plug body 821, and the ring groove and the plug body 821 extrude each other to form a seal.

In FIG. 16, in some embodiments, the vehicle cover 40 is provided with a charging port 481 corresponding to the charging connector 81. One end of the charging port 481 extends toward the charging connector 81, and a shutter 482 is arranged on the end of the charging port 481. The middle of the shutter 482 is provided with a shutter opening 4821, and the position of the shutter opening 4821 corresponds to the charging connector 81. The shutter 482 is provided with at least one water leakage hole 4822, and the water leakage hole 4822 is opened at the lowest point of the shutter 482 along the motorcycle height direction.

In FIG. 16, in some embodiments, the end face of the charging connector 81 facing toward the charging port 481 is provided with a plug body 821, and the end face of the plug body 821 away from the charging connector 81 is at least partially passes through the shutter opening 4821 along the axis direction of the charging connector 81.

In addition, In FIG. 16, in other embodiments, the connection surface between the charging connector 81 and the external connector at least partially passes through the shutter opening 4821 along the axis direction of the charging connector 81.

In FIG. 16, in some embodiments, the vehicle cover 40 is equipped with a charging port cover mounting part 483 corresponding to the charging connector 81. The charging port cover mounting part 483 is positioned at the side of the seats 13 facing toward the front wheel 11, and the charging port cover mounting part 483 is provided with two shaft mounting parts 4831 extending toward the front.

In FIG. 16, in some embodiments, the vehicle cover 40 is connected to a charging port cover 83 that closes the charging port 481. The end face of the charging port cover 83 is smoothly incorporated into the end face of the vehicle cover 40. The locking structure 84 is connected to the vehicle cover 40. The charging port cover 83 is turned and opened toward the dashboard panel 14. The charging port cover 83 is arranged on the charging port cover mounting part 483.

In FIG. 16, the locking structure 84 includes a connecting rod 841, a rotating shaft 842, a button 843 and a torsion spring 844. The connecting rod 841 is connected to one side of the charging port cover 83. The rotating shaft 842 is connected to the connecting rod 841 and is rotatably arranged on the vehicle cover 40. The torsion spring 844 is arranged on the rotating shaft 842, and one end of the torsion spring is connected to the connecting rod 841, and the other end is connected to the vehicle cover 40. The lock of the charging port cover 83 is released after the button 843 is pressed. The connecting rod 841 rotates around the rotating shaft 842 under the action of the restoring force of the torsion spring 844, and the charging port cover 83 opens automatically. The button 843 is arranged on the charging port cover 83, and an elastic element 844 is arranged between the button 843 and the charging port cover 83. In this embodiment, the elastic element 844 is a compression spring.

In FIG. 16, in some embodiments, the connecting rod 841 bents toward the charging connector 81. The connecting rod 841 includes a first segment 8411 connected to the rotating shaft 842 and a second segment 8412 connected to the charging port cover 83. In the rotation plane of the connecting rod 841, the length of the first segment 8411 is greater than or equal to the distance between the edge of the shutter opening 4821 adjacent to the front wheel 11 and the rotation center of the rotating shaft 842. The second segment 8412 passes through the shutter opening 4821 and is connected to the charging port cover 83.

In FIG. 16, in some embodiments, two ends of the rotating shaft 842 are rotatably arranged on the rotating shaft mounting part 4831. A damping member is disposed on the connection between the rotating shaft 842 and the vehicle cover 40.

In FIG. 16, in some embodiments, the charging port cover 83 includes a cover plate 831 and a bottom plate 832. A cavity is defined by the cover plate 831 and the bottom plate 832. A first recess 8321 is defined at one end of the bottom plate 832 facing toward the dashboard panel 14. A second recess 8322 is defined at one end of the bottom plate 832 facing toward the seats 13. The connecting rod 841 is connected to the first recess 8321, and the button 843 is arranged within the second recess 8322.

In FIG. 16, in some embodiments, the cover plate 831 defines a pressing hole 8211 for the button 843 to pass through. The pressing surface of the button 843 is flush with the surface of the cover plate 831, or is sunken from the surface of the cover plate 831 to the bottom plate 832. The outer edge of the button 843 is provided with a limiting convex ring 8431, which is abutted against with the cover plate 831 under the thrust of the elastic element 844 to prevent dust and impurities from entering into the second concave part 8322 through the gap between the pressing surface of the button 843 and the cover plate 831.

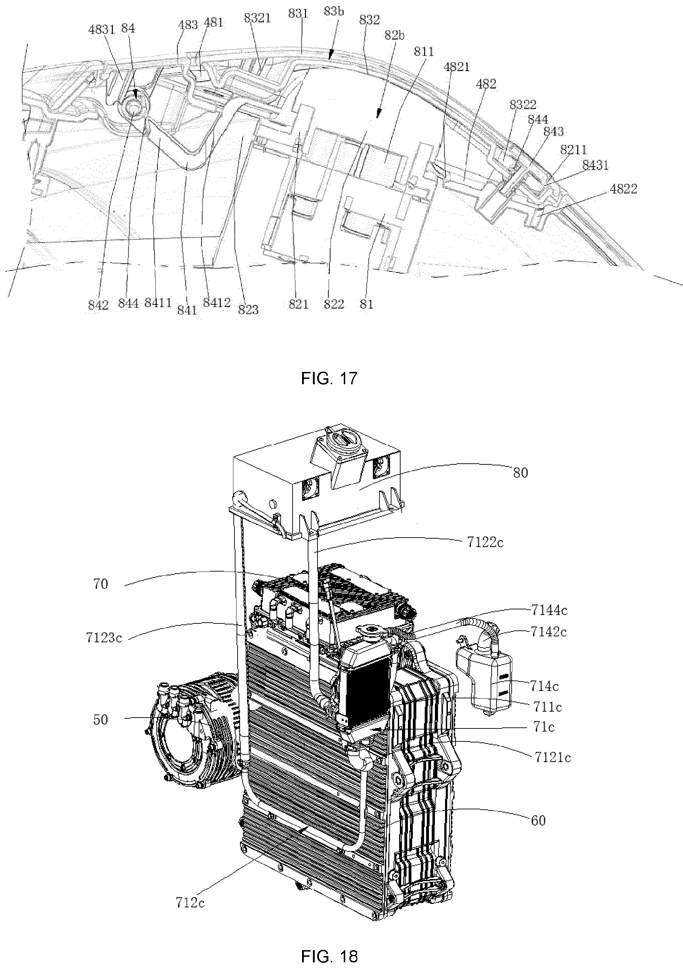

In FIG. 17, in some embodiments, the sealing plug 82b is a part of the charging port cover 83b. The sealing plug 82b is separated from the charging connector 81b to facilitate charging when the charging port cover 83b is opened.

In FIGs. 13-14, in some embodiments, a plurality of cooling fans 85 is arranged on the charging device 80. The air inlet of the cooling fans 85 faces toward the seats 13, and the air outlet of the cooling fans 85 faces toward the interior of the charging device 80. The charging device 80 includes at least two cooling fans 85, and the two cooling fans 85 is symmetrically arranged on the charging device 85 respective to the line connecting the center point of the front wheel 11 and the center point of the rear wheel 12. The charging device 80 is provided with a plurality of air outlets 86 oriented toward the dashboard panel 14. The cooling fans 85 cool down the charging device 80 by air to improve the safety of the motorcycle during charging. The air outlet 86 faces toward the dashboard panel 14 to avoid hot air blowing directly to the driver.

In FIGs.18-19, in other embodiments, the charging device 80 is also be cooled down by a water-cooling device 71c. The water-cooling device 71c includes a water tank 711c, a cooling pipe 712c connected to the water tank 711c, and a water pump 713c connected to the cooling pipe 712c. The coolant in the cooling pipe 712c flows through the charging device 80, and the cooling pipe 712c is partially arranged on the charging device 80. The cooling pipe 712c includes a first pipeline 7121c, a second pipe line 7122c and a third pipeline 7123c. One end of the first pipeline 7121c is connected to the outlet of the water tank 711c, and the other end is connected to the inlet of the water pump 713c. One end of the second pipeline 7122c is in fluid communication with the outlet of the water pump 713c, and the other end is in fluid communication with the inlet of the charging device 80. The third pipeline 7123c is in fluid communication with the outlet of the charging device 80, and the other end is in fluid communication with the return end of the water tank 711c, and the third pipeline 7123c is partially fixed on the battery pack 60.

In FIGs. 18-19, the side wall of water tank 711c is also provided with a plurality of radiating fins 7112c and a radiating fan 7113c. The radiating fan 7113c is used to cooling the water tank 711c. The radiating fan 7113c and the radiating fins 7112c is arranged on the same side. The radiating fan 7113c is installed on the water tank 711c by a fan bracket 7114c to cool down the water tank 711c, which improves the heat dissipation efficiency of the radiating fins 7112c. The air inlet of the radiating fan 7113c faces toward the seats 13, and the air outlet of the radiating fan 7113a faces toward the dashboard panel 14. After the radiating fan 7113c is started, the airflow generated flows from the side adjacent to the seats 13 to the side far away from the seats 13, so as to avoid hot air blowing directly to the driver.

In FIGs.18-19, the water-cooling device 71c also includes an auxiliary water tank 714c arranged on the frame. The auxiliary water tank 714c is fixed on the frame 20 or the battery case 62, and is in fluid communication with the water tank 711c through pipelines. The water tank 711c draws coolant from the auxiliary water tank 714c via negative pressure. The coolant in the auxiliary water tank 714c is automatically replenished to the water tank 711c to maintain the heat dissipation performance of the water cooling device 71c to the charging device 80.

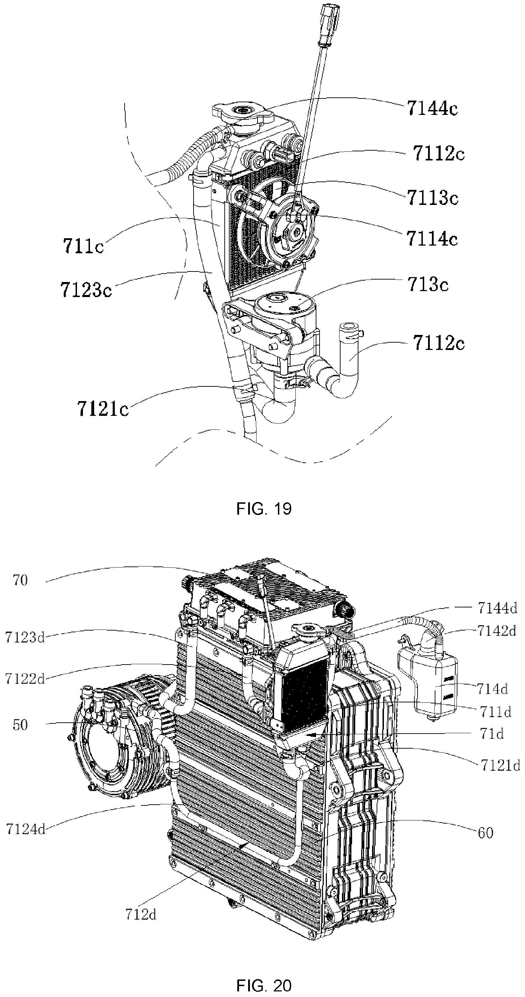

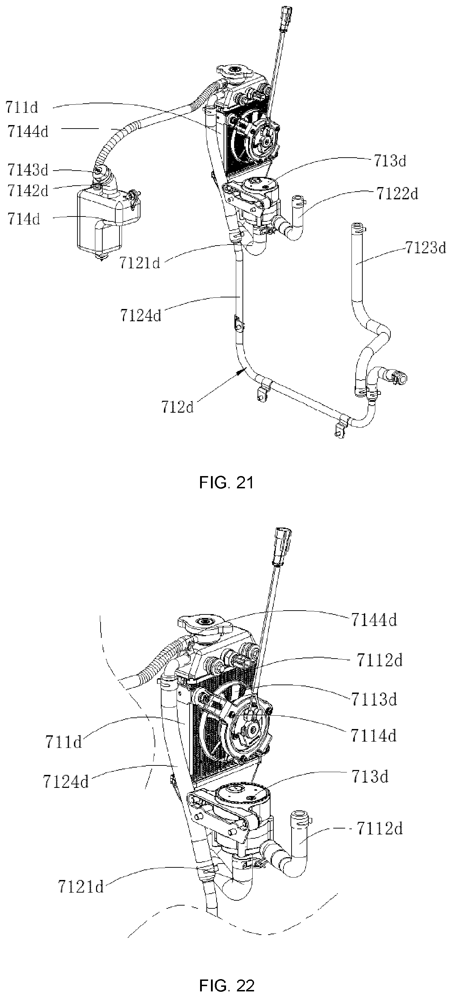

In FIGs. 20-21, in some embodiments, a cooling device 71d for cooling the electric motor 50 and the controller 70 is arranged on the electric motorcycle. The cooling device 71d includes a cooling box 711d, a coolant pipe 712d in fluid communication with the cooling box 711d and a water pump 713d in fluid communication with the coolant pipe 712d. The coolant pipe 712d is partially disposed on the battery pack 60. The coolant pipe 712d includes a first branch pipe 7121d, a second branch pipe 7122d, a third branch pipe 7123d and a fourth branch pipe 7124d. One end of the first branch pipe 7121d is in fluid communication with the outlet of the cooling box 711d, and the other end is in fluid communication with the inlet of the water pump 713d. One end of the second branch pipe 7122d is in fluid communication with the outlet of the water pump 713, and the other end is in fluid communication with the inlet of the controller 70. The third branch pipe 7123d is in fluid communication with the outlet of the controller 70, and the other end is in fluid communication with the inlet of the motor 50. One end of the fourth branch pipe 7124d is in fluid communication with the outlet of the electric motor 50, and the other end is in fluid communication with the return end of the cooling box 711d. The fourth branch pipe 7124d is partially fixed on the battery pack 60. In other embodiments, the coolant in the coolant pipe 712d may first flow through the electric motor 50, then flow through the controller 70, and then return to the cooling box 711d.

In FIGs. 20-21, the side wall of water tank 711d is also provided with a plurality of radiating fins 7112d and a radiating fan 7113d. The radiating fan 7113d is used to cooling the water tank 711d. The radiating fan 7113d and the radiating fins 7112d are arranged on the same side. The radiating fan 7113b is installed on the cooling box 711d by a fan bracket 7114d to cool the cooling box 711d, which improves the heat dissipation efficiency of the radiating fins 7112d. The air inlet of the radiating fan 7113d faces toward the seats 13, and the air outlet of the radiating fan 7113a faces toward the dashboard panel 14. After the radiating fan 7113d is started, the airflow generated flows from the side adjacent to the seats 13 to the side far away from the seats 13, so as to avoid hot air blowing directly to the driver.

In FIGs. 20-21, the cooling device 71d also includes an auxiliary water tank 714d arranged on the frame. The auxiliary water tank 714d is fixed on the frame 20 or the battery case 62, and is in fluid communication with the cooling box 711d through pipelines. The cooling box 711d draws coolant from the auxiliary water tank 714 through negative pressure. The coolant in the auxiliary water tank 714d is automatically replenished to the cooling tank 711d to maintain the heat dissipation performance of the water-cooling device 71 to the electric motor 50.

In FIGs. 17-19, the auxiliary water tank 714d includes an auxiliary water tank body 7141d, water-adding channel7142d, and an auxiliary water tank cap 7143d. The auxiliary water tank body 7141 is mounted on the frame 20 by bolts. The water-adding channel 7142d is in fluid communication with the auxiliary water tank body 7141d. The water-adding channel 7142d is a curved structure, which is convenient for adding water. The auxiliary water tank cap 7143d is detachably connected to the end of the water-adding channel 7142 far away from the auxiliary water tank body 7141d to close the auxiliary water tank body 7141d. In this embodiment, the auxiliary water tank cap 7143d and the auxiliary water tank body 7141d is connected by threads. In other embodiments, they are connected to each other with an interference fit or other connection methods. The auxiliary water tank 714d is fixed to the frame 20. In other embodiments, the auxiliary water tank 714d is fixed to the battery case 62. The auxiliary water tank 714d is positioned on one side of the battery case 62, and the cooling box 711d is positioned on the other side of the battery case 62. In other embodiments, the auxiliary water tank 714d and the cooling box 711d is positioned on the same side of the battery case 62. The auxiliary water tank 714d is in fluid communication with the cooling box 711d through a water-replenishing pipe 7144d fixed on the battery case 62. In other embodiments, the water-replenishing pipe 7144d is fixed on the frame 20. The cooling box 711d is provided with a water-replenishing port in fluid communication with the water-replenishing pipe 7144d. The water in the auxiliary water tank 714d will flow into the water tank 711 through the water-replenishing pipe 7144d when the water level in the cooling box 711d is below the preset value.

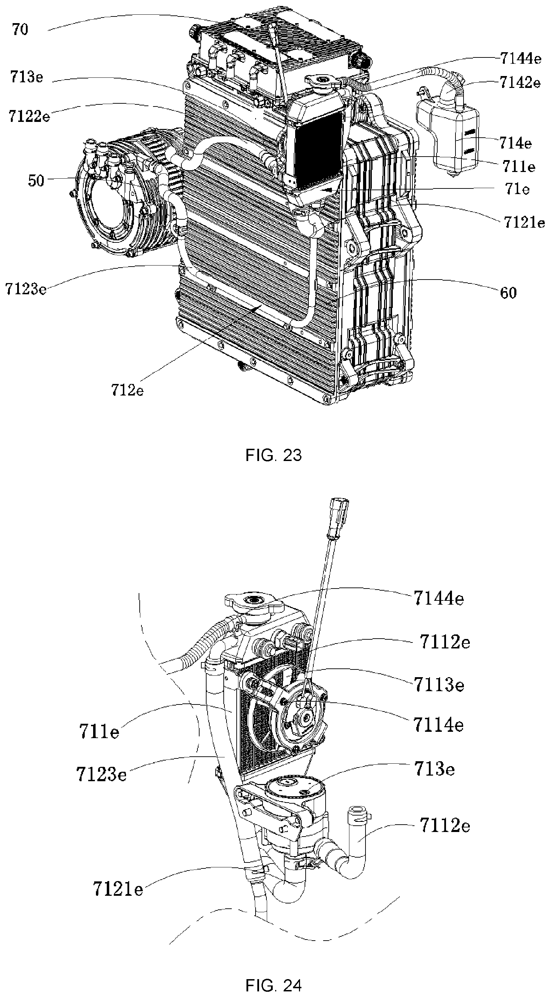

In addition, In FIGs. 23-24, in other embodiments, the electric motor 50 is also be cooled down by a water-cooling device 71e. The water-cooling device 71e includes a water tank 711, a cooling pipe 712e in fluid communication with the water tank 711e, and a water pump 713e in fluid communication with the cooling pipe 712e. The coolant in the cooling pipe 712e flows through the electric motor 50. The cooling pipe 712e includes a first branch pipe 7121e, a second branch pipe 7122e and a third branch pipe 7123e. One end of the first branch pipe 7121e is in fluid communication with the outlet of the water tank 711e, and the other end is in fluid communication with the inlet of the water pump 713e. One end of the second branch pipe 7122e is in fluid communication with the outlet of the water pump 713e, and the other end is in fluid communication with the inlet of the electric motor 50. The third branch pipe 7123e is in fluid communication with the outlet of the electric motor 50, and the other end is in fluid communication with the return end of the cooling box 711d, and the third branch pipe 7123e is partially fixed on the battery pack 60.

In FIGs. 23-24, the side wall of water tank 711e is also be provided with a plurality of radiating fins 7112e and a radiating fan 7113e. The radiating fan 7113e is used to cool the water tank 711e. The radiating fan 7113e and the radiating fins 7112e are arranged on the same side. The radiating fan 7113c is installed on the water tank 711e by a fan bracket 7114e to cool down the water tank 711e, which improves the heat dissipation efficiency of the radiating fins 7112e. The air inlet of the radiating fan 7113e faces toward the seats 13, and the air outlet of the radiating fan 7113a faces toward the dashboard panel 14. After the radiating fan 7113e is started, the airflow generated flows from the side adjacent to the seats 13 to the side far away from the seats 13, so as to avoid hot air blowing directly to the driver.

In FIGs. 23-24, the water-cooling device 71e also includes an auxiliary water tank 714e fixed on the frame 20 or the battery case 62. The auxiliary water tank 714e is in fluid communication with the water tank 711e by a pipeline. The coolant is pumped from the auxiliary water tank 714e into the water tank 711e through negative pressure. The coolant in the auxiliary water tank 714e is automatically replenished to the water tank 711e to maintain the heat dissipation performance of the water-cooling device 71e to the electric motor 50.

In FIGs. 3-5, in some embodiments, the frame 20 includes a front frame 21 adjacent to front wheel 11 and rear frame 22 adjacent to rear wheel 12.

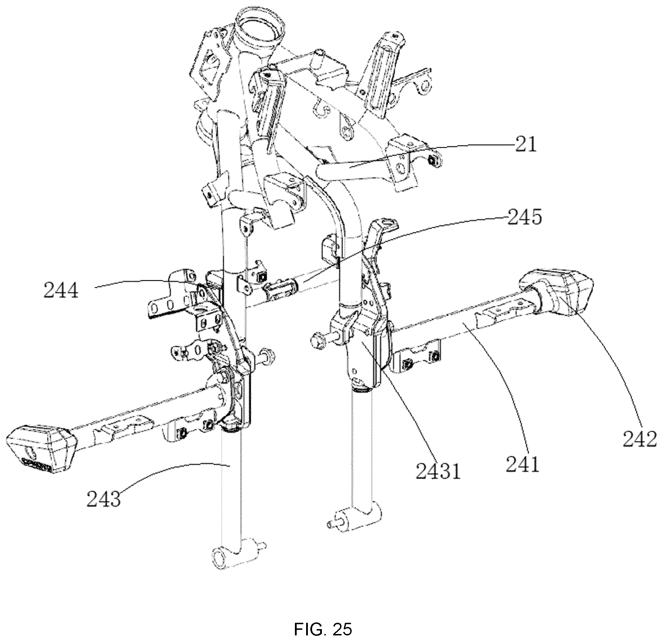

In FIGs. 25-26, in some embodiments, a plurality of front bumpers 241a is mounted on the front frame 21. The number of the front bumpers 241a is greater than or equal to two. Two front bumpers 241a are symmetrically arranged on two sides of the battery housing 62. The front bumpers 241a are straight bar, which reduces the wind resistance of the electric motorcycle at high speed, and improves the controllability and safety of the electric motorcycle. The front bumpers 241a are provided with a buffer member with an elastic structure. In other embodiments, the front bumpers 241a are provided with a hydraulic telescopic rod buffer structure or a pneumatic telescopic rod buffer structure.

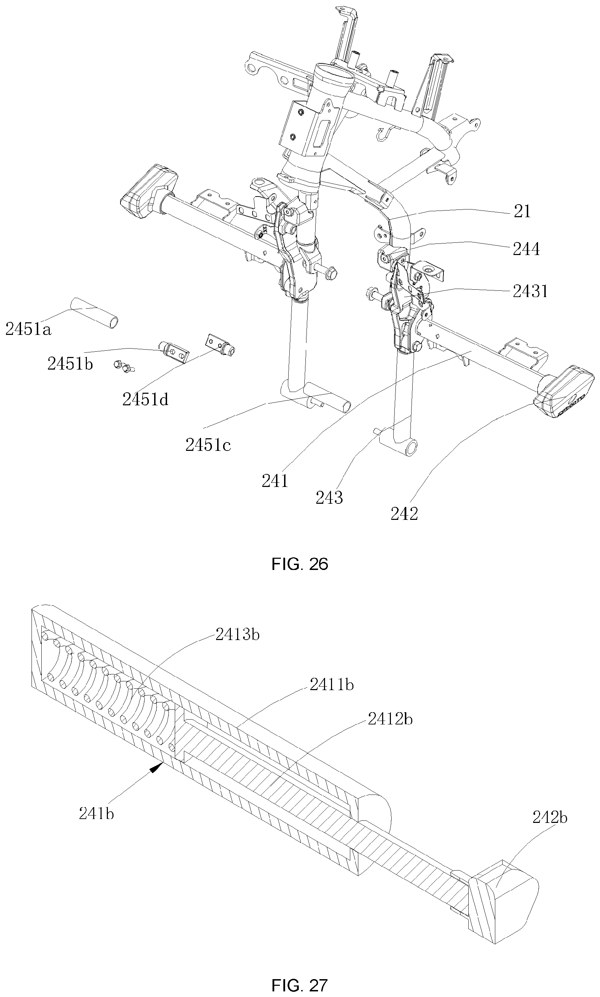

In addition, In FIGs. 27, in other embodiments, each front bumper 241b includes a tube body 2411b and a rod body 2412b connected to the frame 20. A cavity is defined inside the tube body 2411b, and the rod body 2412b is partially inserted into the cavity. A buffer spring 2413b is also inserted into the cavity. One end of the buffer spring 2413b is connected to the rod body 2412b. The buffer member 242b is coupled to the other end of the rod body 2412b.

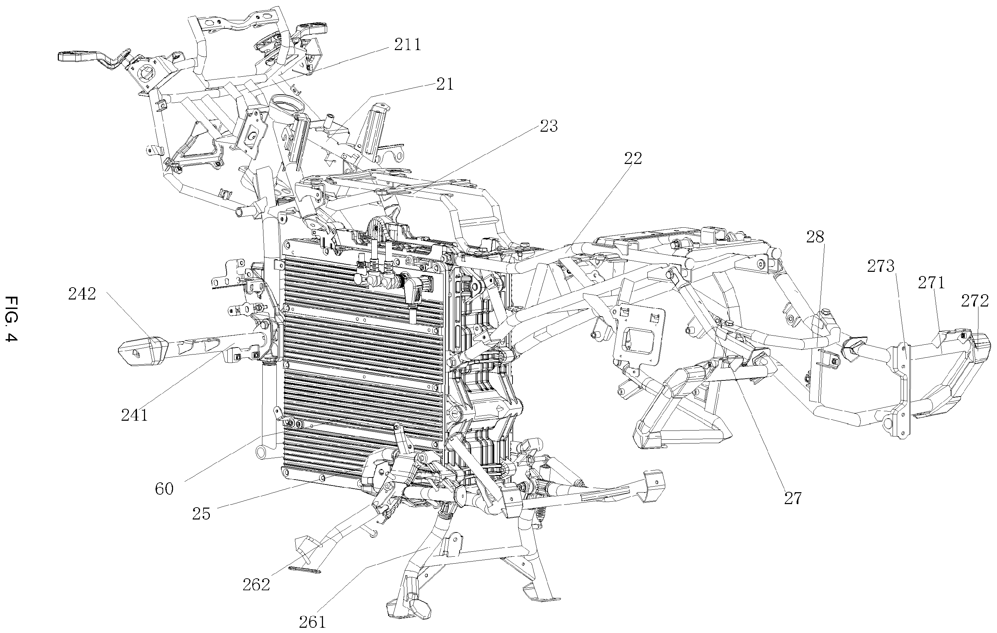

In FIGs. 4-5 and 25-26, in some embodiments, at least two fixing rods 243 is mounted on the front frame 21. One end of the fixing rod 243 is mounted on the front frame 21 by a connector 244, and the other end is connected to the battery case 62. The front bumper 241a is connected to the fixing rod 243 by connecting blocks 2431, which is a part of the fixing rod 243 and symmetrically arranged on two sides of the battery pack 60. Therefore, the pressure from the front bumpers 241a to the battery pack 60 can be transferred to the whole frame 20 when the front bumpers 241a are impacted.

In FIGs. 25-26, in some embodiments, a battery bumper 245 for protecting the battery case 62 from impacting is mounted on the front frame 21. The battery bumper 245 includes a first bumper body 2451a, a first connector 2451b connected to the first bumper body 2451a, a second bumper body 2451c and a second connector 2451d connected to the second bumper body 2451c. The first connector 2451b and the second connector 2451d are staggered and connected by screws. The first bumper body 2451a is connected to one side of the frame, and the second bumper body 2451c is connected to the other side of the frame 20.

In FIGs. 25-26, in some embodiments, the front bumper 241a is connected to one side of the connection block 2431 by screws, and the battery bumper 245 is connected to the other side of the connection block 2431 by screws. The battery bumper 245 is arranged between the two connecting blocks 2431. The axis of the battery bumper 245 is staggered with the axis of the front bumper 241a, which improves the strength between the fixing rods 243 and prevents the deformation of the fixing rods 243 due to the impact force on the front bumpers 241a.

In FIGs. 6-7, in some embodiments, the outer wall of the body case 621 is provided with a plurality of connecting lugs 625 with a shaft hole 6251. The battery case 62 is connected to the frame 20 by the connecting lugs 625.

In FIGs. 6-7, in some embodiments, the side of the battery case 62 adjacent to the front wheel 11 is connected to the front frame 21, and the side of the battery housing 62 adjacent to the rear wheel 12 is connected to the rear frame 22. A plurality of connection seats with a shaft hole is arranged on the outer wall of the battery case 62. Further, the connection seats are an arc-shaped bulges formed on the edge of the body case 621, and the shaft hole penetrates the bulge. The body case 621 is provided with a first connection seat 624a, a second connection seat 624b, a third connection seat 624c, a fourth connection seat 624d, a fifth connection seat 624e, a sixth connection seat 624f and a seventh connection seat 624g. The first connection seat 624a is positioned at the top of the battery case 62. The second connection seat 624b is positioned at the side of the battery case 62 facing toward the front wheel 11. The third connection seat 624c is positioned at the side of the battery case 62 facing toward the rear wheel 12 and at the edge of the battery case 62. The fourth connection seat 624d and the fifth connection seat 624e are both positioned at the side of the battery housing 62 toward the rear wheel 12. Two first connection seats 624a, two second connection seats 624b, two third connection seats 624c, two fourth connection seats 624d, two fifth connection seats 624e, two sixth connection seats 624d and two seventh connection seats 624e are symmetrically positioned on the battery case 62. The first connection seats 624a and the second connection seats 624b are connected to the front frame 21 with shaft and hole fit. The third connection seats 624c and the fourth connection seats 624d are connected to the rear frame 22 with shaft and hole fit. The seventh connection seats 624g are connected to the fixing rods 243 with shaft and hole fit.

In FIGs. 4-5 and 28, in some embodiments, the battery case 62 is connected to a kickstand 25. The kickstand 25 is connected to a middle brace 261 and a diagonal brace 262. The kickstand 25 includes a bracket 251 and a mounting racks 252. The bracket 251 is fitted with the bottom surface of the battery case 62. A bending portion connected to the battery case 62 was defined by bending the two ends of the bracket 251. The bending portion 2511 is fitted with the battery case 62. One end of the bracket 251 facing toward the rear wheel 12 is hinged with the middle brace 261. Two mounting racks 252 is respectively mounted on the two sides of battery case 62. The mounting racks 252 is extended follow the edge contour of the bending portion 2511. One end of the mounting rack is connected to the sixth connection seats 624f of the battery case 62, and the other end is connected to one side surface of the battery case 62. Each mounting rack 252 is provided with a diagonal brace fixing part 2521, which is arranged obliquely against the side surface of the battery case 62, and the diagonal brace fixing part 2521 is hinged with the diagonal brace 262.

In FIGs. 4-5 and 28, in some embodiments, the middle brace 261 is connected to the fifth connection seats 624e. The middle brace 261 includes two symmetrically arranged support rods 2611, one middle deflector rod 2612 and a first tension spring 2613. The support rods 2611 is arranged below the bracket 251. A reinforcing shaft 2614 is connected between the support rods 2611. The middle deflector rod 2612 is connected to one of the two support rods 2611. A connection rib 2616 is connected between the support rod 2611 and the deflector rod 2612. One end of the first tension spring 2613 is connected to the support rod 2611, and the other end is connected to the bracket 251.

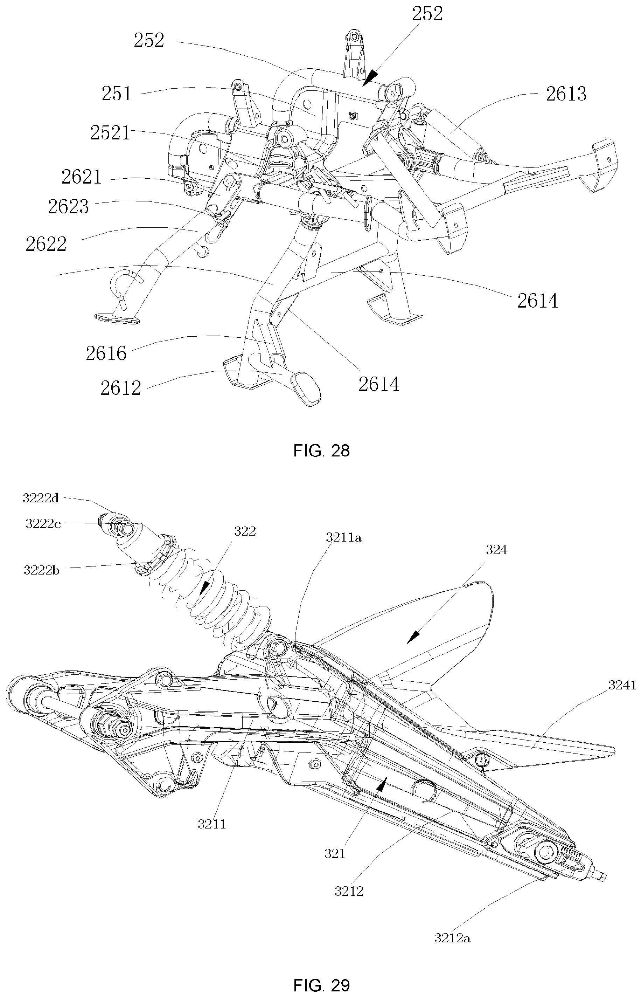

In FIGs. 28, in some embodiments, the diagonal brace 262 includes a diagonal brace hinge 2621, a diagonal brace 2622, and a second tension spring 2623. The diagonal brace hinge 2621 is a part of the diagonal brace 2622, one end of which is hinged with the diagonal brace fixing part 2521. The diagonal brace fixing part 2521 is inclined outwards, and the diagonal brace hinge 2621 and the diagonal brace 2622 is also inclined outwards. One end of the second tension spring 2623 is connected to the diagonal brace 2622, and the other end is connected to the bracket 251.

In FIGs. 4-5, the frame 20 is also provided with an alarm light mounting seat 273. The alarm lamp mounting base 273 is provided with an alarm lamp telescopic rod 2731. The alarm lamp 2731a is arranged on the alarm lamp telescopic rod 2731.

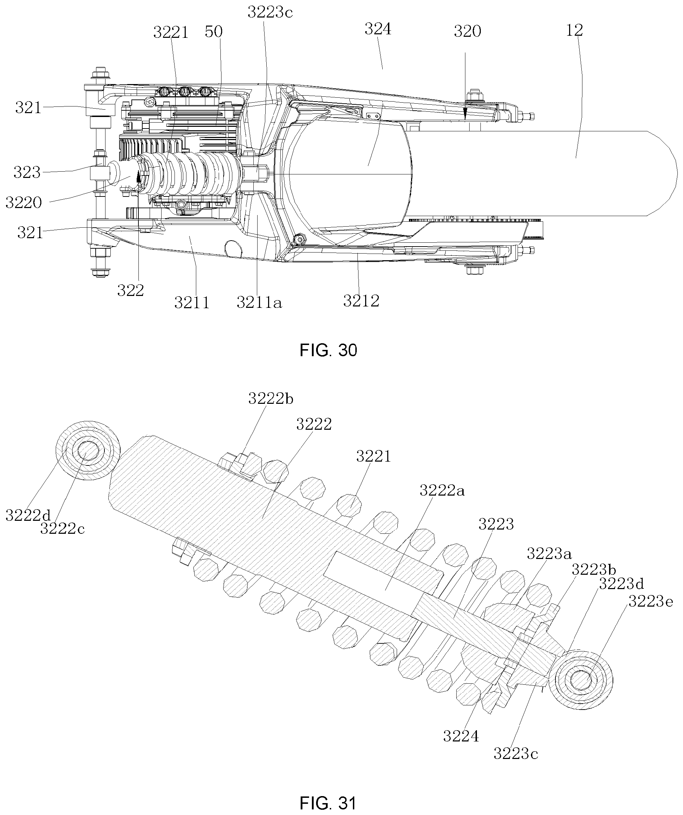

In FIGs.29-31 and 43, the rear suspension 32 includes a rear fork 320. The motor is arranged on the rear fork 320. One end of the rear fork 320 is connected to the rear wheel 12, and the other end is connected to the electric motor 50. The electric motor 50 is arranged at the end away from the rear wheel 12. The electric motor 50 is associated with the rear wheel 12 through a timing belt 41. The electric motor 50 can move synchronously with the rear fork 320, and the tightness of the timing belt 51 remains unchanged.

In FIGs. 29-31, in some embodiments, the rear fork 320 includes two symmetrically arranged support plates 321, and the electric motor 50 is arranged between the two support plates 321.

In FIGs. 29-31 and 7, in some embodiments, the rear fork 320 is provided with an electric motor connecting shaft 323. The seventh connection seats 624g is arranged on the battery case 62. The rear fork 320 is moveably connected to the seventh connection seats 624g by the electric motor connecting shaft 323.

In FIGs. 29-31 and 43, in some embodiments, each support plate 321 is provided with a connection chute 3212a at the same position. A rear wheel connecting shaft 121 is arranged on the rear wheel 12 through a bearing. One end of the rear wheel connecting shaft 121 is connected to the connecting chute 3212a on the one support plate 321, and the other end is connected to the connecting chute 3212a on the other support plate 321. One end of the two support plates 321 with a connecting chute 3212a is connected by a rear wheel connecting shaft 121, and the other end is connected by a electric motor connecting shaft 323, and the electric motor 50 is arranged between two support plates 321.

Each support plate 321 includes an electric motor connecting part 3211 connected to the electric motor connecting shaft 323 and a rear wheel connecting part 3212 connected to the connecting chute 3212a. The electric motor 50 is connected to the electric motor connecting part 3211. The electric motor 50 is positioned between two symmetrically arranged electric motor connecting parts 3211. Moreover, the electric motor connecting shaft 323 may also connected to the battery case 62. A plurality of connecting lugs are arranged on the battery case 62. The connecting lugs with a shaft hole are projections formed on the edge of the battery case 62, and symmetrically arranged on both sides of the battery case 62. The connecting lugs includes a first connecting lug 625a and a second connecting lug 625b. The electric motor connecting shaft 323 is inserted into the shaft hole of the first connecting lug 625a. The rear fork 320 is movably connected to the battery case 61 with a shaft and hole fit, which improves damping performance.

In FIGs. 29-31, in some embodiments, the rear suspension 32 also includes a shock absorber 322, which includes a telescopic rod 3220 and a damping spring 3221 sleeved on the telescopic rod 3220. One end of the telescopic rod 3220 is connected to the battery case 62, and the other end is connected to the rear fork 320. Two cross beam connecting parts 3211a connected to each other is symmetrically arranged on the two support plates 321. The two cross beam connecting parts 3211a are both connected to the telescopic rod 3220. The shock absorber 322 includes a telescopic rod 3220 and a damping spring 3221. One end of the telescopic rod 3220 is connected to the battery case 62, and the other end is connected to the rear fork 320, which can reduce the vibration generated during the movement of the rear fork 320 relative to the battery case 62 and reduce the vibration generated during the driving of the motorcycle.

In FIGs. 29-31, in some embodiments, the telescopic rod 3220 includes a sleeve 3222 and a telescopic rod body 3223. A cavity 3222a is defined in the sleeve 3222. The sleeve 3222 is connected to the battery case 62. One end of the damping spring 3221 is connected to the sleeve 3222, and the other end of the damping spring 3221 is connected to the telescopic rod body 3223. The telescopic rod body 3223 is capable of sliding within the cavity 3222a.

In FIGs. 26-28, in some embodiments, the telescopic rod body 3223 is provided with a shock pad 3223a positioned between the telescopic rod body 3223 and the sleeve 3222. The shock pad 3223a can further reduce the speed of the telescopic rod body moving back and forth relative to the sleeve 3222.

In FIGs.29-31, in some embodiments, a cavity 3222a is defined at one end of the sleeve 3222, and the other end of the sleeve 3222 is provided with a first spring stopper 3222b. One end of the telescopic rod body 3223 is moved in the cavity 3222a, and the other end is provided with a second spring stopper 3223b. One end of the damping spring 3221 is abutted against the first spring stopper 3222b, and the other end is abutted against the second spring stopper 3223b.

In FIGs. 29-31, in some embodiments, the shock pad 3223a is connected to the second spring stopper 3223b. The shock pad 3223a and the telescopic rod body 3223 are positioned on the same side of the second spring stopper 3223b. The second spring stopper 3223b and the shock pad 3223a are both provided with concentrically arranged screw holes. One end of the telescopic rod body 3223 is capable of sliding back and forth in the cavity 3222a, and the other end is connected to the rear fork 320 by the screw hole. The telescopic rod 3220 is be provided with a flange gasket 3224. The flange gasket 3224 is clamped into the screw hole on the second spring stopper 3223b and the screw hole on the telescopic rod body 3223. One end of the telescopic rod body 3223 is capable of sliding in the cavity 3222a, and the other end is connected to a spring adjusting nut 3223c. The second spring stopper 3223b is provided with a damping limit groove, which is a groove formed on the second spring stopper 3223b. The spring adjusting nut 3223c is clamped into the damping limit groove.

In FIGs. 29-31 and FIG. 7, in some embodiments, one end of the telescopic rod 3220 is connected to the battery case 62, and the other end is connected to the rear fork 320. The sleeve 3222 is connected to the battery case 62. The telescopic rod body 3223 is connected to the rear fork 320. A cavity 3222a is defined at one end of the sleeve 3222. The other end of the sleeve 3222 is provided with a first damping connecting shaft 3222c. The first damping connecting shaft 3222c is sleeved with a first connector 3222d, which is connected to the provided with 3222. The first damping connecting shaft 3222c is capable of rotating within the first connector 3222d, and the first damping connecting shaft 3222c is connected to the battery case 62. The first damping connecting shaft 3222c is connected to the second connecting lug 625b.

In FIGs. 29-31, in some embodiments, the telescopic rod body 3223 is connected to the rear fork 320. One end of the telescopic rod body 3223 is capable of sliding within the cavity 3222a, and the other end of the telescopic rod body 3223 is provided with a second damping connecting shaft 3223e. The second damping connecting shaft 3223e is rotatably connected to a second joint 3223d. Each of the two support plates 321 is provided with a cross beam connecting parts 3211a having a damping rod connecting screw hole. The two cross beam connecting parts 3211a are connected to each other. Two ends of the second damping connecting shaft 3223e are respectively inserted into the two damping rod connecting screw hole of the cross beam connecting part 3211a. The telescopic rod body is rotatably connected to the rear flat by a shaft, thereby increasing the mobility of telescopic rod body.

In FIGs.29-31, in some embodiments, a rear fender 324 is arranged on the rear fork 320, the cross section of the rear fender 324 is arc-shaped towards the middle, and the rear fender 324 covers the rear wheel 12. One end of the rear fender 324 is connected to the rear fork 320, and the other end is suspended in midair and covers a part of the rear wheel 12. The middle of the rear fender 324 covers the rear wheel 12, and both sides extend towards two sides of the rear wheel 12.

A driven wheel housing 3241 that covers a driven wheel 122 positioned on the rear wheel 12 is arranged on the rear fender 324. One end of the rear fender 324 is connected to the rear fork 320, and the other end extends along the edge of the rear wheel 12 and is arc-shaped. One end of the rear fender 324 is arc-shaped and suspended in midair. The other end is folded to form a fender connecting part 3242. The cross beam connecting part 3211a on the two symmetrically arranged support plates 52 is connected to the fender connecting part 3242 by screws. The rear fender 324 can prevent the mud and water rolled up by the rear wheel 12 from splashing onto the driver.

In FIGs.1 and 4, in some embodiments, the front cowling 43 can be detachably arranged on the front strut 211. The middle of the front cowling 43 protrudes in the direction of vehicle travel, and both sides bend towards the side opposite to the direction of vehicle travel, thus forming an arc-shaped surface on the front cowling 43. A headlight 152, at least two turn signal lights 153, a windscreen plate 154 and an on-board camera 159 are mounted on the front strut 211. The headlight 152 are arranged on the front cowling 43. Two of the turn signal lights 153 are symmetrically arranged on both sides of the headlight 152. The on-board camera 159 is arranged below the headlight 152, facing toward the direction of from the rear wheel 12 to the front wheel 11. The windscreen plate 154 is arranged on the front cowling 43. The contour of the windscreen plate 154 is fitted with the contour of the front cowling 43, so that the windscreen plate 154 forms an arc-shape similar to the front cowling 43.

In FIGs.1, 2 and 32, in some embodiments, the contour of the windshield 155 is fitted with the contour of the windshield 154, so that the windshield 155 protrudes in the direction of vehicle travel, and both sides bend towards the side opposite to the direction of vehicle travel. That is to say, the middle of the windshield 155 protrudes along the direction of the rear wheel 12 toward the front cowling 43, forming an arched shape.

The windshield 155 is arranged on the windshield plate 154, and the windshield plate 154 is connected to the windshield 155 by a lifting structure 1540. The windshield 155 can slide up and down on the windshield plate 154 driven by the lifting structure 1540. The windshield plate 154 for mixing the windshield 155 increase the strength of the windshield.

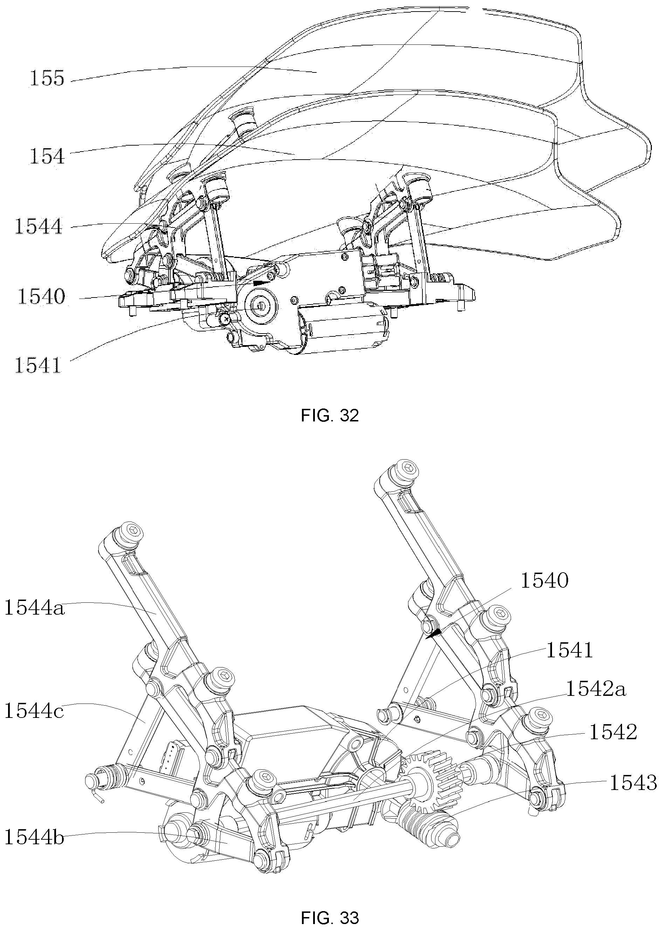

In FIGs.32-33, in some embodiments, the lifting structure 1540 includes a lifting motor 1541, a worm gear 1542, a worm 1543 and two connecting frames 1544. The output shaft of the lifting motor 1541 is connected to the worm 1543. The worm gear 1542 is provided with a worm gear drive rod 1542a connected to the connecting frame 1544. Two ends of worm gear drive rod 1542a are connected to the connecting frames 1544, and the lifting motor 1541 is arranged between the two connecting frames 1544. The power can be transmitted to the worm gear transmission rod 1542a when the output shaft of the lifting motor 1541 is perpendicular to the worm gear drive rod 1542. The cross section of the worm gear drive rod 1542 is square, and the worm gear drive rod 1542 is a metal straight rod. The connecting frame 1544 is provided with a windshield connecting rod 1544a, a rotating rod 1544b and a windshield hinge rod 1544c. One end of the rotating rod 1544b is connected to the worm gear drive rod 1542, and the other end is connected to the windshield connecting rod 1544a. The rotating rod 1544b can be driven by the worm gear drive rod 1542 to rotate. One end of the windshield hinge rod 1544c is rotatably connected to the vehicle head 15, and the other end is rotatably connected to the windshield hinge rod 1544. The worm gear drive rod 1542 can drive the windshield 155 to rotate.

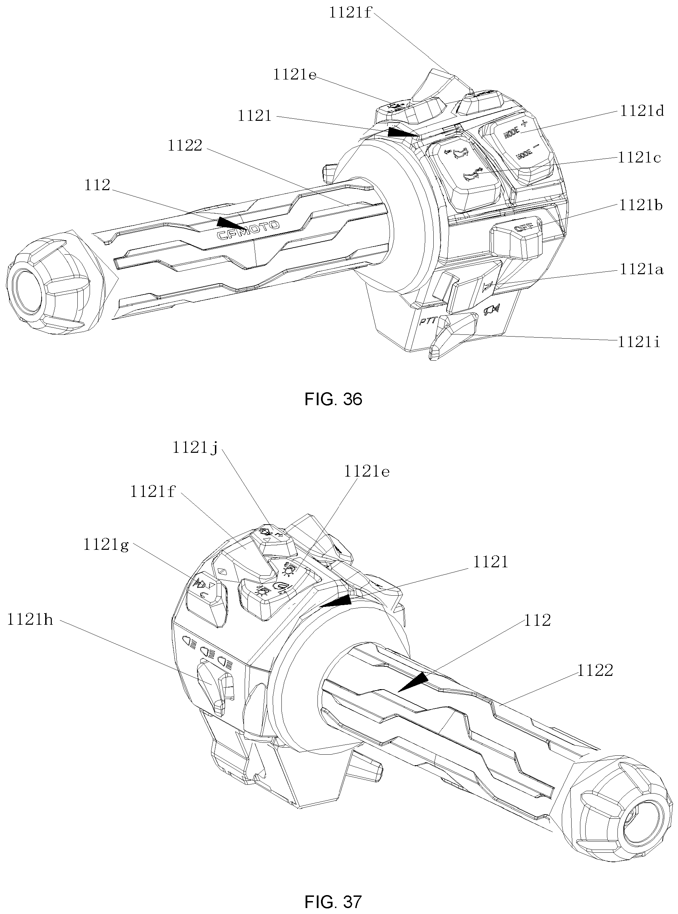

In FIGs.3 and 34-37, in some embodiments, the steering system 110 are associated with the rear suspension 31 to control the rotation of the front wheel 11. The steering system includes a steering handle 111 and a pair of a grip assemblies 112 symmetrically arranged on both sides of the steering handle 111. The driver holds one of the grip assemblies 112 in each hand while driving.

In FIGs. 3 and 34-37, in some embodiments, the grip assembly 112 includes a grip switch assembly 1121 and an electronic-controlled throttle 1122. The electronic-controlled throttle 1122 is a hollow rod body. The electronic-controlled throttle 1122 is sleeved on the steering handle 111. The output power of the electric motor 50T can be increased by turning electronic-controlled throttle 1122. Each grip assembly 112 also includes two grip counterbalance blocks 1123 and a thread insert 1124. The electronic-controlled throttle1122 is sleeved on the steering handle 111. The two grip counterbalance block 1123 are respectively arranged on two ends of the steering handle 111. The grip counterbalance block 1123 is abutted against the electronic-controlled throttle 1122. A through hole is defined at the axial position of the grip counterbalance block 1123. The thread insert 1124 is inserted into the through hole. The thread insert 1124 is abutted against the grip counterbalance block 1123, which is abutted against the electronic-controlled throttle 1122, so as to fix the electronic-controlled throttle 1122 on the steering handle 111. One end of the electronic-controlled throttle 1122 is connected to the grip counterbalance block 1123, and the other end is connected to the switch assembly 1121. The electronic-controlled throttle 1122 is equipped with a grip sleeve 11221, which is abutted against the switch assembly 1121. The steering handle 111 is also provided with a hand-operated brake 351, which is associated with the brake system 100.

An x-axis is defined as the length direction of the electric motorcycle, and a y-axis is defined as the height direction of the electric motorcycle. The projection of the first operation area on a cutting plane coordinate system xoy is in the scanning area of - 45-0°.

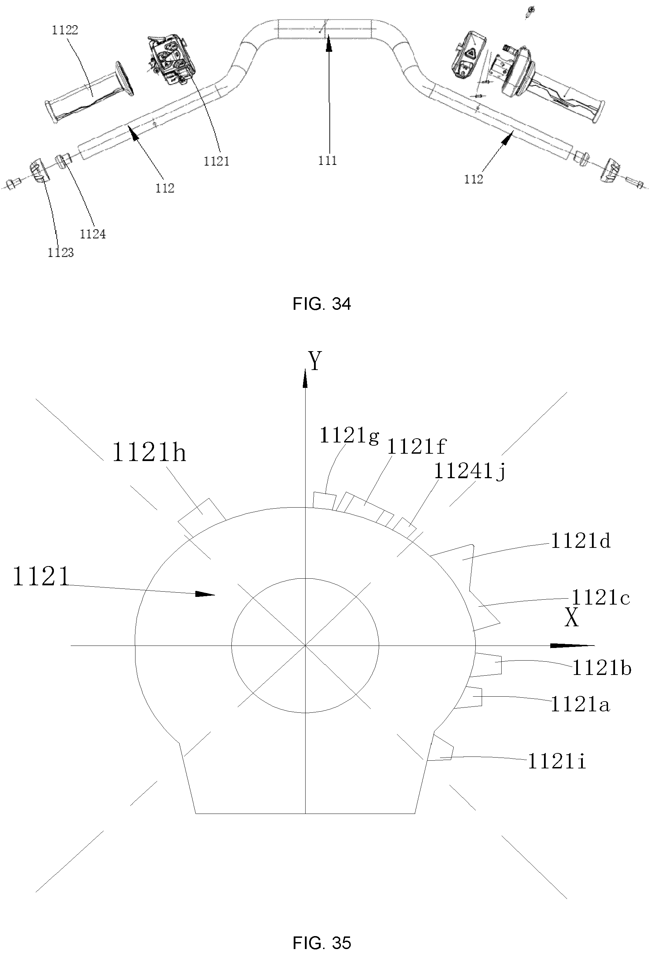

In FIGs. 34-37, in some embodiments, the girp assembly 112 is provided with a switch assembly 1121, and a plurality of buttons are arranged in different areas of the switch assembly 1121. The switch assembly 1121 is provided with a first operation area, a second operation area, a third operation area and a fourth operation area. An x-axis is defined as the length direction of the electric motorcycle, and a y-axis is defined as the height direction of the electric motorcycle. The projection of the first operation area on a cutting plane coordinate system xoy is in the scanning area of -45-0°. The projection of the second operation area on a cutting plane coordinate system xoy is in the scanning area of 0- 45°. The projection of the third operation area on a cutting plane coordinate system xoy is in the scanning area of 45- 90°. The projection of the fourth operation area on a cutting plane coordinate system xoy is in the scanning area of 90-135°.

The first operation area is provided with a horn button 1121a and turn signal light button 1121b. The second operation area is provided with a power assisted pushing button 1121c and a shift button 1121d. The power assisted pushing button 1121c can realize the switching of forward gear and backward gear mainly by controlling the switching of forward and reverse rotation of electric motor 50. The third operation area is provided with a multi-function button, a loudspeaker button 1121g, and a loudspeaker circular broadcast button 1121j. The fourth operation area is provided with a high and low beam light on/off button 1121h.

In FIGs. 3 and 34-37, in some embodiments, the multi-function button includes a lifting button 1121e and a switching button 1121f. The lifting button 1121e is provided with a concave portion. The switching button 1121f is partially inserted into the concave portion after the switching button moves toward the steering handle. The lifting button 1121e is capable of controlling the lifting of the windshield 154 when the switching button 1121f is inserted into the concave portion. The lifting button 1121e is capable of controlling the lifting of the alarm light when the switching button 1121f is detached from the concave portion. Alternatively, in other embodiments, the lifting button 1121e is capable of controlling the lifting of the alarm lights when the switching button 1121f is inserted into the concave portion. The buttons with different frequency of use are arranged in different areas, which can increase the convenience of operation and facilitate the driver to remember the positions of buttons with different functions. Windshield can be raised and lowered according to different driving scenarios.

In FIGs. 3 and 34-37, in some embodiments, the first operation area is also provided with a photographing button 1121i for controlling the on-board camera 159. The on-board camera is configured to capture photos during cruise.

In FIGs. 1 and 2, in some embodiments, the vehicle cover 40 covers the most of the electric motorcycle 100. Gaps are defined between various components on the vehicle cover 40 to provide air flow to the inner wall of the vehicle cover, thereby cooling various components covered by the vehicle cover 40. The vehicle cover 40 includes a side cover 41, a upper cowling 42, a front cowling 43, a battery cover 44, a lower cowling 45, a front fender 46, a front shield 47, a charging device cover 48 and a rear fork cover 49. Gaps are defined between various components on the vehicle cover 40 to provide air flow to the interior of the vehicle cover, thereby cooling various components covered by the vehicle cover 40. The charging device cover 48 covers the charging device 80. The battery cover 44 is wrapped on the outside of the battery case 62, and the upper cowling 42 is positioned between the charging device cover 48 and the battery cover 44. One end of the battery cover 44 fits the upper cowling 43, and the other end fits the lower cowling 45. The front shield 47 is arranged between the front wheel 11 and the power battery 60. The front shield 47 is provided with a vent for air. The rear fork cover 49 covers the area of the rear suspension 32.

In FIGs. 1, 2 and 38, in some embodiments, the rear fork cover 49 is provided with one or more foot pedals 491, and the foot pedals 491 are provided with anti-skid grooves. The foot pedals 491 include an upper foot pedal 4911 and a lower foot pedal 4912. The upper foot pedal 4911 is covered with the lower foot pedal 4912. The anti-skid groove is arranged on the upper foot pedal 4911, and the lower foot pedal 4912 is connected to the rear fork cover 49.

In FIGs. 1, 2 and 38, in some embodiments, the rear fork cover 49 is at least provided with one or more foot pedals 491. The one or more foot pedals 491 include a inclined foot pedal 491 inclined to the rear fork cover 49. The foot pedal 491 is provided with a foot pedal connecting block 4913, which is connected to the rear fork cover 49. The rear fork cover 49 is provided with a plurality of pedal connecting slots 4914, and at least one pedal connecting slot 4914 has an inclined inner wall. The pedal connecting block 4913 is closely fitted with the side wall of the pedal connecting slot 4914.

The foot pedal connecting block 4913 and the foot pedal connecting slot 4914 are both provided with a concentrically arranged foot pedal connecting through hole. The foot pedal connecting shaft 4915 is inserted into the foot pedal connecting through hole. The foot pedal connecting shaft 4915 is sleeved with a foot pedal reset member 4916. The foot pedal reset part 4916 is a torsion spring.

In FIGs. 35-38, in some embodiments, two rear side-boxes 91 arranged on the frame include a box body 911 and a box cap 912. The two rear side-boxes 91 are respectively arranged at two sides of the electric motorcycle 100. The box body 911 and the vehicle cover 40 are integrated_{∘} The frame 20 is provided with a rear tail cover/center guard plate, which is a part of the vehicle cover 40. The box body 911 is a part of the rear tail cover/center guard plate, and the box body 911 and the rear tail cover are integrated. The rear side-box and the vehicle cover are integrated, which can increase the aesthetics and the connection strength of the vehicle cover. The box body 911 includes a side-box cap 911a and a side-box liner 911b. The side-box inner 911b is placed inside the side-box cap 911a, and the contour of the he side box inner 911b is fitted with the contour of the side-box cap 911a. The side-box cover 912 comprises a side-box top cover 912c, a side-box cover inner plate 912b and a side-box cover cap 912a fitted with each other. The side-box cover inner plate 912b is positioned between the side-box top cover 912c and the side-box cover cap 912a.

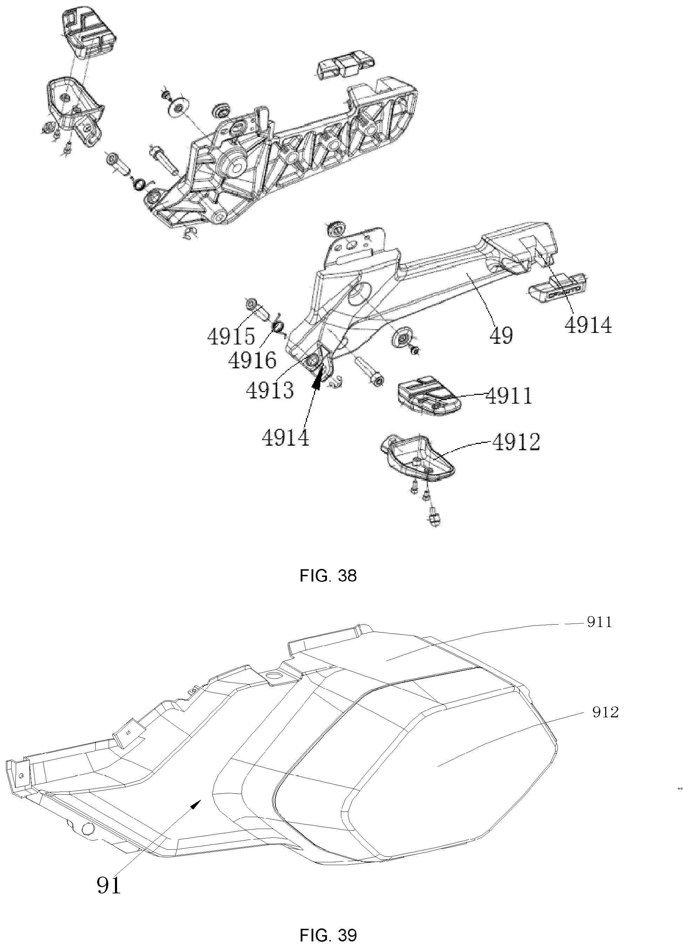

In FIGs. 39-43, in some embodiments, the box body 911 and the box cover 912 are movably connected to each other. One end of the box body 911 and one end of the box cap 912 are hinged by a rear side-box hinge 913, and the other ends are connected by a locking structure 914. The distance from the central point of the rear wheel 12 to the rear side -box hinge 913 is less than the distance from the central point of the rear wheel 12 to the locking structure 914.

In FIGs.35-38, in some embodiments, the box body 911 is provided with a box cover puller 915. One end of the box cover puller 915 is hinged with the box body 911, and the other end is hinged with the box cover 912. When the box cover 912 is opened and turned toward the ground, the box cover puller 915 will pull the box cover 912. A rear side-box containing cavity is defined on the box 911. An annular bulge 916 is formed along the circumferential wall of the rear side box containing cavity. The side-box cover 912 covers the annular bulge 916. The rear side-box hinges 913 and the side-box cover puller 915 are all arranged on the annular bulge 916. The locking member 914 is arranged on the annular bulge 916. The locking member 914 includes a drive member 9141, a plurality of locking members 9142, and a locating member 9143.

In FIGs. 39-43, in some embodiments, the locating member 9143 is provided with a side-box locating opening 9143a, and the locking member 9142 moves back and forth in the side-box locating opening 9143a. The locking members 9142 are connected to the drive member 9141 by a locating member connecting piece 9144, and the locating member connecting piece 9144 is arranged around the annular bulge 256. The locating member 9143 is provided with an opening 9143b connected to the side-box locating opening 9143a. The drive member 9141 drives the locating member connecting piece 9144 to move back and forth. A drive member drives the locating member to enter the locating opening 9143a from the locating member opening 9143b, or enter the locating member opening 9143b from the locating opening 9143a. The side-box can be released and opened by the locking members.

In FIGs. 2-5, in some embodiments, at least two rear bumpers 27 connected to the frame are arranged at two sides of the electric motorcycle 100. Two of the rear bumpers 27 are symmetrically arranged at two sides of the electric motorcycle 100. The two rear bumpers 27 are connected to each other by a rear bumper connection rod 28. Two ends of the connection rod 28 are respectively connected to the two rear bumpers 27. The rear bumpers 27 are provided with a rear bumper folding part 271, which is formed by bending the rear bumper 27.

The distance of the rear bumper 27 along the width of the motorcycle is greater than the distance of the side box assembly 91 along the width of the motorcycle. The shortest distance between the end faces of the two rear bumpers 27 is greater than the shortest distance between the end faces of the two side-box assemblies 91. The rear bumper 27 is provided with a rear bumper buffer structure. The rear bumper buffer structure is a rear bumper buffer pad 272 at the end of the rear bumper 27. The rear bumper buffer pad 272 is a rubber pad. The buffer structure arranged on the rear bumper can protect the rear bumper body in case of emergency. The distance between the rear bumpers in a width direction is greater than the distance between the side-boxes, so that the rear bumpers can protect the side boxes.

In FIGs. 2-5, in some embodiments, the alarm lamp mounting seat 273 is arranged on the rear bumpers 27, and the alarm lamp mounting seat 273 is connected to the rear bumper folding part 271 on the rear bumper.

In FIGs.1 and 43-44, in some embodiments, a trunk assembly 92 includes a trunk body 921 and a trunk cover 922 hinged by a trunk cover hinge 923. A trunk storage chamber for containing articles is defined in the trunk body 921. A trunk boss 924 is formed by extending the circumferential wall of the trunk storage chamber toward the axis of the trunk storage chamber. The trunk cover hinge 923 is arranged on the trunk boss 924.

In FIGs. 43-44, in some embodiments, the trunk cover hinge 923 includes an articulated ring sleeve 9231. The trunk body 921 is provided with a trunk articulated shaft 9211 on which the articulated ring sleeve 9231 is sleeved. The trunk cover hinge 923 is also connected to the trunk cover 922.

In FIGs. 43-40 and 1, in some embodiments, the trunk 92 is also provided with a trunk clearance lamp 926, which can reflect light. The trunk clearance lamp 926 is arranged on the side of the trunk body 921. The trunk 92 is also provided with a trunk backrest 927 connected to the side of the trunk body 921. The trunk backrest 927 is arranged on the side of the trunk 92 facing the back of the rider. That is to say, the trunk backrest 927 is concave toward the side of the trunk body 921. The side of the trunk 92 that contacts the trunk backrest 927 is curved. That is to say, the side of the trunk 92 that contacts the trunk backrest 927 is concave toward the center of the trunk 92.

In FIGs. 46-47, in some embodiments, the trunk assembly 92 may also be removable to dispose a rear seat 93 and a rear seat backrest assembly 931. The rear seat backrest assembly 931 includes a backrest cushion 9311 and a backrest cushion bracket 9111 connected to the backrest cushion 9311. The backrest cushion bracket 9111 is connected to the frame 20.

In FIGs. 46-47, in some embodiments, the backrest cushion bracket 9111 is connected to the cushion armrest 9313 and the backrest connecting frame 9314, wherein the number of the cushion armrest 9313 is equal to or greater than two. One end of each cushion armrest 9313 is connected to the backrest connecting frame 9314, and the other end is connected to the rear frame 22. The backrest cushion 9311 includes the backrest cushion body and the backrest cushion connecting plate 9311a, which is connected to the backrest cushion bracket 9111. That is to say, the backrest cushion connecting plate 9311a is connected to the backrest connecting frame 9314. One end of the backrest connecting frame 9314 is connected to the backrest connecting plate 9311a, and the other end is connected to the rear armrest trim cover 9314a.

In FIGs. 48-49, the rear wheel 12 includes a rear wheel connecting shaft 121, a hub 122, a pulley 123 and the timing belt 124. The rear wheel connecting shaft 121 passes through the rear wheel 12, so that the rear wheel 12 can rotate about the rear wheel connecting shaft 121. The pulley 123 is arranged on the hub 122. One end of the timing belt 124 is sleeved on the pulley 123, and the other end is sleeved on the output shaft of the electric motor 50. The surface of the pulley 123 is provided with a hard layer 1231, which is a part of the pulley 123. The thickness of the hard layer 1231 is 30 µm-60 µm or 40 µm-50 µm. The lightweight of the pulley improves the strength of the pulley and reduces the weight.

## Claims

1. An electric motorcycle (10) comprising:
a frame (20);
a front wheel (11);
a rear wheel (12);
a seat (13) arranged on the frame (20);
a vehicle cover (40) arranged on the frame (20);
a dashboard panel (14) arranged on the frame (20);
a controller (70);
a suspension system comprising a front suspension (31) and a rear suspension (32), the front wheel (11) being connected to the frame (20) by the front suspension (31), and the rear wheel (12) being connected to the frame (20) by the rear suspension (32);
an electric motor (50), the rear wheel (12) being connected to the electric motor (50);
a battery pack (60) arranged on the frame (20), the battery pack (60) being electrically connected to the electric motor (50); and
a charging device (80) arranged on the frame (20) and electrically connected to the battery pack (60), the charging device (80) including a charging connector (81);
wherein the battery pack (60), the controller (70) and the charging device (80) are arranged in sequence along the height direction of the frame (20), the battery pack (60) and the charging device (80) are positioned on the frame (20) adjacent to the front wheel (11), and the controller (70) is arranged on the battery pack (60);
wherein the rear suspension (32) comprises a rear fork (320) and a shock absorber (322) connected to the frame (20) by a shaft, the rear fork (320) is connected to the rear wheel (12); and the battery pack (60) comprises a battery (61) and a battery case (62), the battery is arranged within the battery case (62), and the battery case is connected to the frame (20); **characterized in that**
the electric motor (50) is arranged on the rear fork (320);
the battery case (62) is configured for enhancing a strength of the frame (20) and improving a firmness of the electric motorcycle (10).

2. The electric motorcycle (10) of claim 1, wherein the frame (20) comprises a front frame (21) adjacent to the front wheel (11) and a rear frame (22) adjacent to the rear wheel (12), the side of the battery case (62) adjacent to the front wheel (11) is connected to the front frame (21), and the side of the battery case (62) adjacent to the rear wheel (12) is connected to the rear frame (22).

3. The electric motorcycle (10) of claim 1, wherein the battery case (62) comprises a body case (621) and a plurality of side plates (622) fixed on the body case (621) by bolts.

4. The electric motorcycle (10) of claim 1, wherein the bottom of the battery case (62) is provided with a plurality of indentations (6211), a cushion block (6212) is arranged between two adjacent indentations (6211), the upper end surface of the cushion block (6212) is flat with the upper end surface of the indentation (6211), and a plurality of holes are defined on each cushion block (6212).

5. The electric motorcycle (10) of claim 2, wherein the side of the battery case (62) adjacent to the front wheel (11) is provided with a first connection seat (624a) and a second connection seat (624b), and the side of the battery case (62) adjacent to the rear frame (22) is provided with a third connection seat (624c) and a fourth connection seat (624d), wherein the first connection seat (624a) and the second connection seat (624b) are connected to the front frame (21) by shafts, and the third connection seat (624c) and the fourth connection seat (624d) are connected to the rear frame (22) by shafts.

6. The electric motorcycle (10) of claim 1, wherein the electric motorcycle (10) defines a cooling air passage (63) for cooling the battery pack (60).

7. The electric motorcycle (10) of claim 6, wherein the cooling air passage (63) is a passage formed around the battery pack (60) and a space between the vehicle cover (40) and the battery pack (60).

8. The electric motorcycle (10) of claim 1, wherein the controller (70) is positioned at one end of the battery case (62) adjacent to the dashboard panel (14).

9. The electric motorcycle (10) of claim 8, wherein the battery case (62) comprising an installation portion (623) defining a groove therein, the controller (70) is installed, and the controller (70) is fixed on the battery case (62) by screws.

10. The electric motorcycle (10) of claim 1, wherein a cooling device (71b) for cooling the controller (70) is arranged on the frame (20), the cooling device (71b) comprises a cooling box (711b), a coolant pipe (712b) in fluid communication with the cooling box (711b) and a pump body (713b) in fluid communication with the coolant pipe (712b), and the coolant pipe (712b) is at least partially arranged on the controller (70).

11. The electric motorcycle (10) of claim 10, wherein the controller (70) is provided with a controller-coolant channel having an inlet and an outlet; the coolant pipe comprises a first branch pipe (7121b) in fluid communication with the outlet of a water tank (714b) and the inlet of the pump body (713b), a second branch pipe (7122b) in fluid communication with the inlet of the controller-coolant channel and a third branch pipe (7123b) in fluid communication with the outlet of the controller-coolant channel, and the second branch pipe (7122b) is in fluid communication with the pump body (713b).

12. The electric motorcycle (10) of claim 11, wherein the electric motor (50) is provided with an electric motor-coolant channel having an inlet and an outlet; the coolant pipe further comprises a fourth branch pipe in fluid communication with the outlet of the electric motor-coolant channel, the third branch pipe is in fluid communication with the inlet of the electric motor-coolant channel, and the fourth branch pipe is in fluid communication with a water tank.

13. The electric motorcycle (10) of claim 1, wherein the frame (20) further comprises a reinforce bracket, one end of the reinforce bracket is connected to the front frame (21) and the other end of the reinforce bracket is connected to the rear frame (22), and the charging device (80) is arranged on the reinforce bracket.

14. The electric motorcycle (10) of claim 13, wherein a line connecting a center point of the front wheel (11) and the center point of the rear wheel (12) is defined as a straight line L1, an axis along a length direction of the charging connector (81) is defined as a straight line L2, an angle is defined by the straight line L1 and the straight line L2, and the angle is in the range from 30° to 60°.

## Patentansprüche

1. Ein Elektromotorrad (10), umfassend:
einen Rahmen (20);
ein Vorderrad (11);
ein Hinterrad (12);
einen Sitz (13), der am Rahmen (20) angeordnet ist;
eine Fahrzeugabdeckung (40), die am Rahmen (20) angeordnet ist;
ein Armaturenbrett (14), das am Rahmen (20) angeordnet ist;
einen Regler (70);
ein Aufhängungssystem, umfassend eine Vorderradaufhängung (31) und eine Hinterradaufhängung (32), wobei das Vorderrad (11) über die Vorderradaufhängung (31) mit dem Rahmen (20) verbunden ist und das Hinterrad (12) über die Hinterradaufhängung (32) mit dem Rahmen (20) verbunden ist;
einen Elektromotor (50), wobei das Hinterrad (12) mit dem Elektromotor (50) verbunden ist;
ein Batteriepaket (60), das am Rahmen (20) angeordnet ist, wobei das Batteriepaket (60) elektrisch mit dem Elektromotor (50) verbunden ist; und
eine Ladeeinrichtung (80), die am Rahmen (20) angeordnet und elektrisch mit dem Batteriepaket (60) verbunden ist, wobei die Ladeeinrichtung (80) einen Ladeanschluss (81) umfasst;
wobei das Batteriepaket (60), der Regler (70) und die Ladeeinrichtung (80) in einer Sequenz entlang der Höhenrichtung des Rahmens (20) angeordnet sind, das Batteriepaket (60) und die Ladeeinrichtung (80) am Rahmen (20) in der Nähe des Vorderrads (11) positioniert sind, und der Regler (70) auf dem Batteriepaket (60) angeordnet ist;
wobei die Hinterradaufhängung (32) eine Hinterradgabel (320) und einen Stoßdämpfer (322) umfasst, der über eine Welle mit dem Rahmen (20) verbunden ist, wobei die Hinterradgabel (320) mit dem Hinterrad (12) verbunden ist; und das Batteriepaket (60) eine Batterie (61) und ein Batteriegehäuse (62) umfasst, wobei die Batterie im Batteriegehäuse (62) angeordnet ist und das Batteriegehäuse mit dem Rahmen (20) verbunden ist;
**dadurch gekennzeichnet, dass**
der Elektromotor (50) an der Hinterradgabel (320) angeordnet ist;
das Batteriegehäuse (62) dazu konfiguriert ist, die Festigkeit des Rahmens (20) zu erhöhen und die Stabilität des Elektromotorrads (10) zu verbessern.

2. Das Elektromotorrad (10) nach Anspruch 1, wobei der Rahmen (20) einen vorderen Rahmenabschnitt (21), der dem Vorderrad (11) benachbart ist, und einen hinteren Rahmenabschnitt (22), der dem Hinterrad (12) benachbart ist, umfasst, wobei die dem Vorderrad (11) benachbarte Seite des Batteriegehäuses (62) mit dem vorderen Rahmenabschnitt (21) verbunden ist und die dem Hinterrad (12) benachbarte Seite des Batteriegehäuses (62) mit dem hinteren Rahmenabschnitt (22) verbunden ist.

3. Das Elektromotorrad (10) nach Anspruch 1, wobei das Batteriegehäuse (62) ein Gehäusekörper (621) und eine Vielzahl von Seitenplatten (622) umfasst, die mittels Bolzen am Gehäusekörper (621) befestigt sind.

4. Das Elektromotorrad (10) nach Anspruch 1, wobei der Boden des Batteriegehäuses (62) mit einer Vielzahl von Vertiefungen (6211) versehen ist, ein Dämpfungsblock (6212) zwischen zwei benachbarten Vertiefungen (6211) angeordnet ist, die obere Endfläche des Dämpfungsblocks (6212) mit der oberen Endfläche der Vertiefung (6211) fluchtet, und eine Vielzahl von Löchern auf jedem Dämpfungsblock (6212) definiert ist.

5. Das Elektromotorrad (10) nach Anspruch 2, wobei die dem Vorderrad (11) benachbarte Seite des Batteriegehäuses (62) mit einem ersten Verbindungssitz (624a) und einem zweiten Verbindungssitz (624b) versehen ist, und die dem hinteren Rahmenabschnitt (22) benachbarte Seite des Batteriegehäuses (62) mit einem dritten Verbindungssitz (624c) und einem vierten Verbindungssitz (624d) versehen ist, wobei der erste Verbindungssitz (624a) und der zweite Verbindungssitz (624b) über Wellen mit dem vorderen Rahmenabschnitt (21) verbunden sind und der dritte Verbindungssitz (624c) und der vierte Verbindungssitz (624d) über Wellen mit dem hinteren Rahmenabschnitt (22) verbunden sind.

6. Das Elektromotorrad (10) nach Anspruch 1, wobei das Elektromotorrad (10) einen Kühlluftkanal (63) zur Kühlung des Batteriepakets (60) definiert.

7. Das Elektromotorrad (10) nach Anspruch 6, wobei der Kühlluftkanal (63) ein Kanal ist, der um das Batteriepaket (60) herum und im Raum zwischen der Fahrzeugabdeckung (40) und dem Batteriepaket (60) gebildet ist.

8. Das Elektromotorrad (10) nach Anspruch 1, wobei der Regler (70) an einem Ende des Batteriegehäuses (62) positioniert ist, das dem Armaturenbrett (14) benachbart ist.

9. Das Elektromotorrad (10) nach Anspruch 8, wobei das Batteriegehäuse (62) einen Einbaubereich (623) umfasst, in dem eine Nut definiert ist, wobei der Regler (70) installiert ist und der Regler (70) mittels Schrauben am Batteriegehäuse (62) befestigt ist.

10. Das Elektromotorrad (10) nach Anspruch 1, wobei eine Kühleinrichtung (71b) zur Kühlung des Reglers (70) am Rahmen (20) angeordnet ist, wobei die Kühleinrichtung (71b) eine Kühlbox (711b), ein mit der Kühlbox (711b) strömungsverbundenes Kühlmittelrohr (712b) und einen mit dem Kühlmittelrohr (712b) strömungsverbundenen Pumpenkörper (713b) umfasst, wobei das Kühlmittelrohr (712b) zumindest teilweise auf dem Regler (70) angeordnet ist.

11. Das Elektromotorrad (10) nach Anspruch 10, wobei der Regler (70) mit einem Regler-Kühlmittelkanal versehen ist, der einen Einlass und einen Auslass aufweist; wobei das Kühlmittelrohr einen ersten Abzweig (7121b) umfasst, der mit dem Auslass eines Wassertanks (714b) und dem Einlass des Pumpenkörpers (713b) strömungsverbunden ist, einen zweiten Abzweig (7122b), der mit dem Einlass des Regler-Kühlmittelkanals strömungsverbunden ist, und einen dritten Abzweig (7123b), der mit dem Auslass des Regler-Kühlmittelkanals strömungsverbunden ist, wobei der zweite Abzweig (7122b) mit dem Pumpenkörper (713b) strömungsverbunden ist.

12. Das Elektromotorrad (10) nach Anspruch 11, wobei der Elektromotor (50) mit einem Elektromotor-Kühlmittelkanal versehen ist, der einen Einlass und einen Auslass aufweist; wobei das Kühlmittelrohr weiterhin einen vierten Abzweig umfasst, der mit dem Auslass des Elektromotor-Kühlmittelkanals strömungsverbunden ist, wobei der dritte Abzweig mit dem Einlass des Elektromotor-Kühlmittelkanals strömungsverbunden ist, und der vierte Abzweig mit einem Wassertank strömungsverbunden ist.

13. Das Elektromotorrad (10) nach Anspruch 1, wobei der Rahmen (20) ferner eine Verstärkungsstrebe umfasst, wobei ein Ende der Verstärkungsstrebe mit dem vorderen Rahmenabschnitt (21) verbunden ist und das andere Ende mit dem hinteren Rahmenabschnitt (22) verbunden ist, und wobei die Ladeeinrichtung (80) auf der Verstärkungsstrebe angeordnet ist.

14. Das Elektromotorrad (10) nach Anspruch 13, wobei eine Linie, die einen Mittelpunkt des Vorderrads (11) mit einem Mittelpunkt des Hinterrads (12) verbindet, als Gerade L1 definiert ist, eine Achse entlang der Längsrichtung des Ladeanschlusses (81) als Gerade L2 definiert ist, ein Winkel durch die Gerade L1 und die Gerade L2 definiert ist, und der Winkel im Bereich von 30° bis 60° liegt.

## Revendications

1. Une motocyclette électrique (10) comprenant :
un cadre (20) ;
une roue avant (11) ;
une roue arrière (12) ;
une selle (13) agencée sur le cadre (20) ;
un couvercle de véhicule (40) agencé sur le cadre (20) ;
un panneau de tableau de bord (14) agencé sur le cadre (20) ;
un contrôleur (70) ;
un système de suspension comprenant une suspension avant (31) et une suspension arrière (32), la roue avant (11) étant reliée au cadre (20) par la suspension avant (31), et la roue arrière (12) étant reliée au cadre (20) par la suspension arrière (32) ;
un moteur électrique (50), la roue arrière (12) étant reliée au moteur électrique (50) ;
un bloc-batterie (60) agencé sur le cadre (20), le bloc-batterie (60) étant électriquement connecté au moteur électrique (50) ; et
un dispositif de charge (80) agencé sur le cadre (20) et électriquement connecté au bloc-batterie (60), le dispositif de charge (80) comprenant un connecteur de charge (81) ;
le bloc-batterie (60), le contrôleur (70) et le dispositif de charge (80) étant agencés en séquence selon la direction de hauteur du cadre (20), le bloc-batterie (60) et le dispositif de charge (80) étant positionnés sur le cadre (20) à proximité de la roue avant (11), et le contrôleur (70) étant agencé sur le bloc-batterie (60) ;
la suspension arrière (32) comprenant un bras arrière (320) et un amortisseur (322) relié au cadre (20) par un arbre, le bras arrière (320) étant relié à la roue arrière (12) ;
et le bloc-batterie (60) comprenant une batterie (61) et un boîtier de batterie (62), la batterie étant agencée à l'intérieur du boîtier de batterie (62), et le boîtier de batterie étant relié au cadre (20) ;
**caractérisé en ce que**
le moteur électrique (50) est agencé sur le bras arrière (320) ;
le boîtier de batterie (62) est configuré pour renforcer la solidité du cadre (20) et améliorer la rigidité de la motocyclette électrique (10).

2. La motocyclette électrique (10) selon la revendication 1, dans laquelle le cadre (20) comprend un cadre avant (21) adjacent à la roue avant (11) et un cadre arrière (22) adjacent à la roue arrière (12), le côté du boîtier de batterie (62) adjacent à la roue avant (11) étant relié au cadre avant (21), et le côté du boîtier de batterie (62) adjacent à la roue arrière (12) étant relié au cadre arrière (22).

3. La motocyclette électrique (10) selon la revendication 1, dans laquelle le boîtier de batterie (62) comprend un corps de boîtier (621) et une pluralité de plaques latérales (622) fixées au corps de boîtier (621) par des boulons.

4. La motocyclette électrique (10) selon la revendication 1, dans laquelle le fond du boîtier de batterie (62) est pourvu d'une pluralité d'indentations (6211), un bloc de coussinet (6212) étant agencé entre deux indentations (6211) adjacentes, la surface d'extrémité supérieure du bloc de coussinet (6212) étant au même niveau que la surface d'extrémité supérieure de l'indentation (6211), et une pluralité de trous étant définis sur chaque bloc de coussinet (6212).

5. La motocyclette électrique (10) selon la revendication 2, dans laquelle le côté du boîtier de batterie (62) adjacent à la roue avant (11) est pourvu d'un premier siège de connexion (624a) et d'un deuxième siège de connexion (624b), et le côté du boîtier de batterie (62) adjacent au cadre arrière (22) est pourvu d'un troisième siège de connexion (624c) et d'un quatrième siège de connexion (624d), le premier siège de connexion (624a) et le deuxième siège de connexion (624b) étant reliés au cadre avant (21) par des arbres, et le troisième siège de connexion (624c) et le quatrième siège de connexion (624d) étant reliés au cadre arrière (22) par des arbres.

6. La motocyclette électrique (10) selon la revendication 1, dans laquelle la motocyclette électrique (10) définit un conduit d'air de refroidissement (63) destiné au refroidissement du bloc-batterie (60).

7. La motocyclette électrique (10) selon la revendication 6, dans laquelle le conduit d'air de refroidissement (63) est un passage formé autour du bloc-batterie (60) et un espace entre le couvercle de véhicule (40) et le bloc-batterie (60).

8. La motocyclette électrique (10) selon la revendication 1, dans laquelle le contrôleur (70) est positionné à une extrémité du boîtier de batterie (62) adjacent au panneau de tableau de bord (14).

9. La motocyclette électrique (10) selon la revendication 8, dans laquelle le boîtier de batterie (62) comprend une portion d'installation (623) définissant une rainure dans laquelle le contrôleur (70) est installé, et le contrôleur (70) est fixé sur le boîtier de batterie (62) par des vis.

10. La motocyclette électrique (10) selon la revendication 1, dans laquelle un dispositif de refroidissement (71b) destiné au refroidissement du contrôleur (70) est agencé sur le cadre (20), le dispositif de refroidissement (71b) comprenant une boîte de refroidissement (711b), un tuyau de liquide de refroidissement (712b) en communication fluide avec la boîte de refroidissement (711b) et un corps de pompe (713b) en communication fluide avec le tuyau de liquide de refroidissement (712b), et le tuyau de liquide de refroidissement (712b) étant au moins partiellement agencé sur le contrôleur (70).

11. La motocyclette électrique (10) selon la revendication 10, dans laquelle le contrôleur (70) est pourvu d'un canal de liquide de refroidissement de contrôleur ayant une entrée et une sortie ; le tuyau de liquide de refroidissement comprenant un premier tuyau dérivé (7121b) en communication fluide avec la sortie d'un réservoir d'eau (714b) et l'entrée du corps de pompe (713b), un deuxième tuyau dérivé (7122b) en communication fluide avec l'entrée du canal de liquide de refroidissement de contrôleur, et un troisième tuyau dérivé (7123b) en communication fluide avec la sortie du canal de liquide de refroidissement de contrôleur, le deuxième tuyau dérivé (7122b) étant en communication fluide avec le corps de pompe (713b).

12. La motocyclette électrique (10) selon la revendication 11, dans laquelle le moteur électrique (50) est pourvu d'un canal de liquide de refroidissement de moteur électrique ayant une entrée et une sortie ; le tuyau de liquide de refroidissement comprenant en outre un quatrième tuyau dérivé en communication fluide avec la sortie du canal de liquide de refroidissement de moteur électrique, le troisième tuyau dérivé étant en communication fluide avec l'entrée du canal de liquide de refroidissement de moteur électrique, et le quatrième tuyau dérivé étant en communication fluide avec un réservoir d'eau.

13. La motocyclette électrique (10) selon la revendication 1, dans laquelle le cadre (20) comprend en outre un support de renforcement, une extrémité du support de renforcement étant reliée au cadre avant (21) et l'autre extrémité étant reliée au cadre arrière (22), et le dispositif de charge (80) étant agencé sur le support de renforcement.

14. La motocyclette électrique (10) selon la revendication 13, dans laquelle une ligne reliant un point central de la roue avant (11) et un point central de la roue arrière (12) est définie comme une ligne droite L1, un axe selon la direction longitudinale du connecteur de charge (81) est défini comme une ligne droite L2, un angle est défini par la ligne droite L1 et la ligne droite L2, et l'angle est compris dans la plage allant de 30° à 60°.
